# EUROPEAN PATENT SPECIFICATION

(11) **EP 1 148 394 B1**
(45) Date of publication and mention of the grant of the patent: **27.09.2006**
(21) Application number: 01108519.8
(22) Date of filing: 04.04.2001
(51) Int. Cl.: G05B 13/02

(54) **Characteristic control device**
Vorrichtung zur Steuerung eines Kennwertes
Disositif de commande d'une caractéristique

(30) Priority: 04.04.2000 JP 2000101999; 12.04.2000 JP 2000111016
(43) Date of publication of application: 24.10.2001
(73) Proprietor: YAMAHA HATSUDOKI KABUSHIKI KAISHA, Iwata-shi, Shizuoka-ken (JP)
(72) Inventor: Kamihira, Ichikai, Iwata-Shi, Shizuoka-ken (JP)
(74) Representative: Grünecker, Kinkeldey, Stockmair & Schwanhäusser Anwaltssozietät

(56) References cited:
- EP-A- 0 715 253
- EP-A- 0 957 416
- EP-A- 0 969 385
- US-A- 5 043 862
- US-A- 5 213 077
- US-A- 5 546 506
- US-A- 5 971 579
- US-A- 6 032 139

## Description

This invention relates to a characteristic control device for controlling a controlled object and to a method for controlling a controlled object. In particular to a characteristic control device capable of changing the characteristics of a control object according to the use conditions, such as the skill and preference of a user, and use environment, of the control object.

In JP-A-11-210517, a technique is proposed to change the characteristics (namely the parameter values for determining the relationship between input and output of a control module) of a control module for controlling a control object according to the use condition of the control object.

To put it concretely, JP-A-11-210517 proposes to judge the running condition, change electronic throttle characteristic according to the judged running condition, and optimize the drive force characteristic relative to the accelerator operation.

However, a problem with the conventional technique described above is the inability of coping with preferences of different users, daily changes in the user's physical condition and skill, changes in the use environment, variations in manufacture of the control object, etc. because the running condition is judged using a predetermined fuzzy rule, and the characteristics can be changed only within a predetermined algorithm.

To solve the above problem, although it is conceivable to change the predetermined fuzzy rule, it is impossible for the user to customize the rule because the change requires high level of knowledge and technique. It is also impossible to change the algorithm for calculating the target drive force (namely the characteristic) after judging the running condition.

As described above, it is true that the characteristics of the control module for controlling the control object can be changed with the conventional technique to some extent according to the use condition. However, the change can be made only within a range that can be predicted by the designer, and cannot meet the preferences of an indefinite number of individual users. It is a far cry from meeting the day to day changes in even a single user's physical conditions and skill and variations in manufacture.

Prior art document US 5,971,579 teaches a unit and a method for determining gains of a PID (Proportion, Integral, Differential) controller using a genetic algorithm. A genetic algorithm tuning unit decodes an output value from an object system extracted by a feature extracting unit, and generates a first population including a random binary string. Then, the first population is normalized in a given ratio to measure a PID gain converting fitness with respect to the first population. Thereafter, the normalized first population is compared with the decoded value to determine whether it is a user's desired value. If the desired value is obtained, the genetic algorithm tuning unit generates PID gain control signals with respect to the resulting value, which are supplied to the PID controller to tune PID gains.

Prior art document US 5,213,077 teaches a gain adjusting device for a PID controller for controlling the rotational speed of an internal combustion engine. A plurality of characteristic variables concerning the rotational speed are detected so as to be used for inference, and the plurality of characteristic variables are divided into a plurality of sets. Groups of rules each indicating the relationship between the characteristic variable corresponding to each set and an amount of gain adjustment, as well as the relationship between the magnitude of the characteristic variable corresponding to each set and the degree of adoption of the amount of gain adjustment, are stored. When it is determined that each of the characteristic variables cannot be controlled within a permissible range, the relationship between each of the characteristic variables of the groups of rules and the amount of gain adjustment is corrected in such a manner that the permissible range is broadened. The amount of gain adjustment for each set is inferred on the basis of the characteristic variable detected and each group of rules, and the degree of adoption of the amount of gain adjustment is determined for each of the sets in correspondence of the manipulated variable of the respective characteristic variables. On the basis of the result of inference of the amount of gain adjustment and the degree of adoption, an amount of gain to be adjusted is determined by calculating a weighted average value of the result of inference of the amount of gain adjustment with the degree of adoption set as weight. This amount of gain to be adjusted is set in a PID controller.

Prior art document US 6,032,139 teaches an evolutionary control for a subject such as an engine installed in a vehicle conducted by the steps of: selecting coefficients, as genes, affecting the control characteristics of the control system; creating plural control units as chromosomes, each being constituted by plural genes; expressing the genes of each chromosome as control characteristics by controlling the subject using the control system having the control characteristics; selecting at least one chromosome from the created chromosomes based on the control characteristics expressed by the genes in view of the user's preference; and causing the at least one chromosome to evolve using a genetic algorithm, thereby obtaining control characteristics suitable for the user. In this method, the characteristics of the product can effectively be adjusted after its purchase based on the user's preference.

It is an objective of the present invention to provide a characteristic control device for controlling a controlled object and to a method for controlling a controlled object, wherein the controllability of the control object is improved.

According to the present invention, this objective is solved by a characteristic control device for controlling a controlled object having the features of independent claim 1.

Advantageously such a characteristic control device is capable of solving the conventional problems described above by flexibly changing the characteristics of a control object according to the skill and preference of a user and to the use conditions, such as use environment, of the control object.

Preferred embodiments of the present invention are laid down in further dependent claims.

According to the present invention, this objective is also solved by a method for controlling a controlled object having the features of independent claim 14.

Preferred embodiments of the present invention are laid down in further dependent claims.

In the following, the present invention is explained in greater detail with respect to several embodiments thereof in conjunction with the accompanying drawings, wherein:
- FIG. 1: is a general block diagram of a control device having a characteristic control device of a first basic embodiment;
- FIG. 2: is a schematic block diagram of a characteristic change means;
- FIG. 3: is a block diagram of an example constitution in which a characteristic control device and a control device having a basic control module are separate from each other;

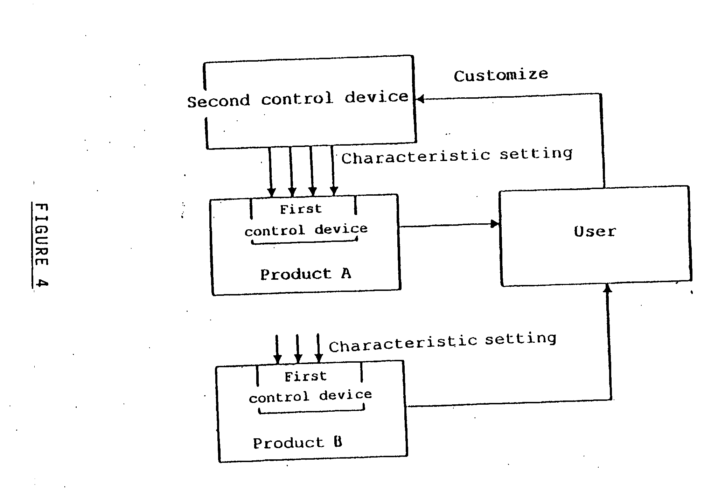

- FIG. 4: is a model diagram of a constitution in which a control device having a basic control module is assumed to be a first control device installed in a control object, and a characteristic control device is assumed to be a second control device, with the first and second control devices arranged separately from each other;
- FIG. 5: is a model diagram in which the characteristic control device is connected to a network;
- FIG. 6: shows graphs of examples of typical static characteristics;
- FIG. 7: shows relation between throttle input and throttle output with varied dynamic characteristics;
- FIG. 8: is a general block diagram in which the characteristic control device is embodied as a running characteristic control device of a motorcycle;
- FIG. 9: is a general block diagram of a throttle control module;
- FIG. 10: is a conceptual drawing of basic throttle characteristic parameters stored in the characteristic storage means;
- FIG. 11: is a general block diagram of an automatic characteristic changing means;
- FIG. 12: shows an example of user interface;
- FIG. 13: is a general block diagram showing an example constitution of an automatic characteristic changing means related to skill levels;
- FIG. 14: shows an example constitution of a user interface in case an automatic characteristic changing means is constituted in relation to skill levels;
- FIG. 15: shows an example of applying a characteristic control device of the invention to speech and behavior of a robot; and
- FIG. 16: shows an example of applying a characteristic control device of the invention to the assist characteristic of an electric motor-assisted bicycle;
- FIG. 17: is a general block diagram of a control device having a characteristic control device of a second basic embodiment;
- FIG. 18: is a general block diagram of a constitution of a characteristic generating means in the control device;
- FIG. 19: is a general flowchart of a process from generating to storing characteristics in the control device shown in FIG. 17;
- FIG. 20: is a general block diagram of an automatic characteristic changing means;
- FIG. 21: is a block diagram of an example constitution with separate characteristic control device and basic control module;
- FIG. 22: is a model diagram of a constitution in which a control device having a basic control module is assumed to be a first control device installed in a control object, and a characteristic control device is assumed to be a second control device, with the first and second control devices arranged separately from each other;
- FIG. 23: is a model diagram in which the characteristic control device is connected to a network;
- FIG. 24: shows graphs of examples of typical static characteristics;
- FIG. 25: shows relation between throttle input and throttle output with varied dynamic characteristics;
- FIG. 26: is a general block diagram of a running characteristic control device of a motorcycle to which a characteristic control device is applied;
- FIG. 27: is a general block diagram of a throttle control module;
- FIG. 28: shows an example of gene coding method when hereditary algorithm is used;
- FIG. 29: shows an example of operation panel in an operating section;
- FIG. 30: is a general block diagram of automatic characteristic changing means;
- FIG. 31: is an example of displaying fuzzy rules in a characteristic output ratio determining section on a map;
- FIG. 32: shows an example of applying a characteristic control device of the invention to speech and behavior of a robot; and
- FIG. 33: shows an example of applying a characteristic control device of the invention to the assist characteristic of an electric motor-assisted bicycle.

Several embodiments of the characteristic control device of a control object (hereinafter simply called the characteristic control device) are described in reference to appended drawings.

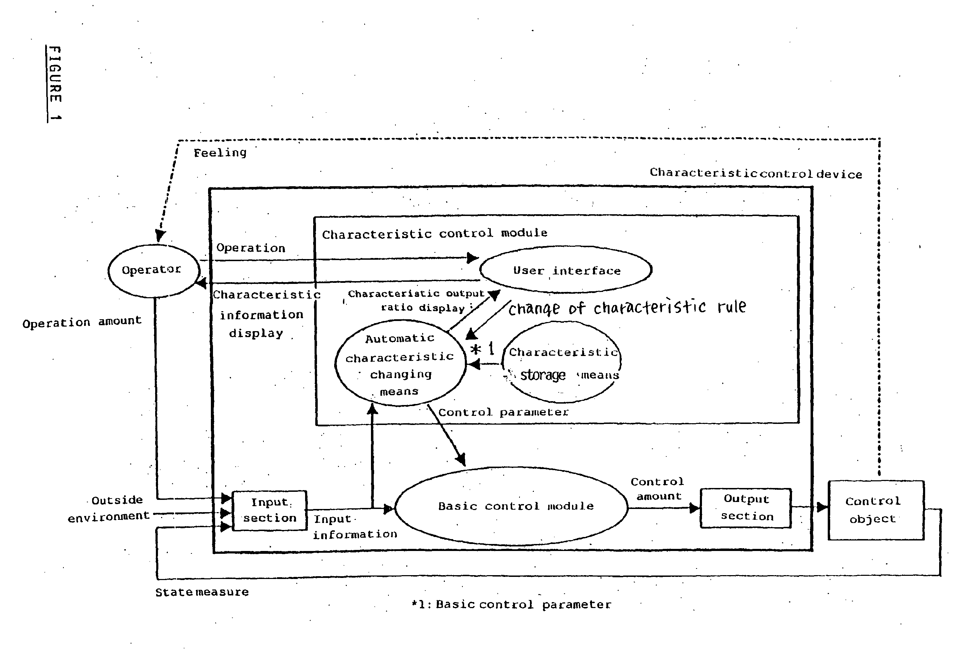

FIG. 1 is a general block diagram of a control device comprising a characteristic control device of first basic embodiment.

As shown in the figure, this control device comprises: a basic control module which calculates the control amount of a control object on the basis of input information (the amount of operation by a user, information obtained from the outside environment, the measure of state of the control object obtained from the control object, etc.) inputted through an input section, and controls the control object through an output section; a characteristic storage means which stores a plurality of basic control parameters; an automatic characteristic changing means which automatically determines the output ratio of plural basic control parameters stored in the characteristic storage means according to specified input information, calculates a control parameter to be applied to the basic control module on the basis of the determined output ratio, and outputs the control parameter; and a user interface for displaying to the user the characteristic changing condition in the automatic characteristic changing means and for enabling the user to manipulate the characteristic changing condition.

In the characteristic storage means are stored in advance plural control parameters and characteristic information corresponding to the control parameters.

Here, the "characteristic information" may be constituted, in addition to the use condition of the control object corresponding to the respective control parameters, with any appropriate information. To put it concretely, for example, if a basic control parameter of a control object is the basic control parameter of a motorcycle in the state of acceleration, the characteristic information is "acceleration characteristic" or "acceleration + its level (for example, acceleration state: low/medium/high." To the characteristic information may be further added the identity of the user (for example, Mr./Ms. A, B, etc.), physical condition of the user (for example, body temperature, pulse rate, etc.), skill of the user (for example, the period since the user got a driver's license), or the use environment of the control object (for example, location, weather, time, etc.). As a result, the characteristic information is given in detailed form such as "acceleration state: low when the body temperature of Mr. A is ** C, pulse rate is **, and weather is clear).

The characteristic storage means can store the basic control parameter in increased number of maps according to the number of pieces of information that constitute the characteristic information. To put it concretely, the basic control parameter can be stored using plural maps for the running characteristic for different users, or using plural maps for the running characteristic according to different weather conditions.

Next, the constitution of the automatic characteristic changing means will be briefly described.

The automatic characteristic changing means calculates from the plural basic control parameters stored in the storage means a single control parameter to be applied to the basic control module, and changes the control parameter of the basic control module at appropriate time intervals. The appropriate time intervals are determined, for example, with changes in the use condition, in preset control cycle, etc.

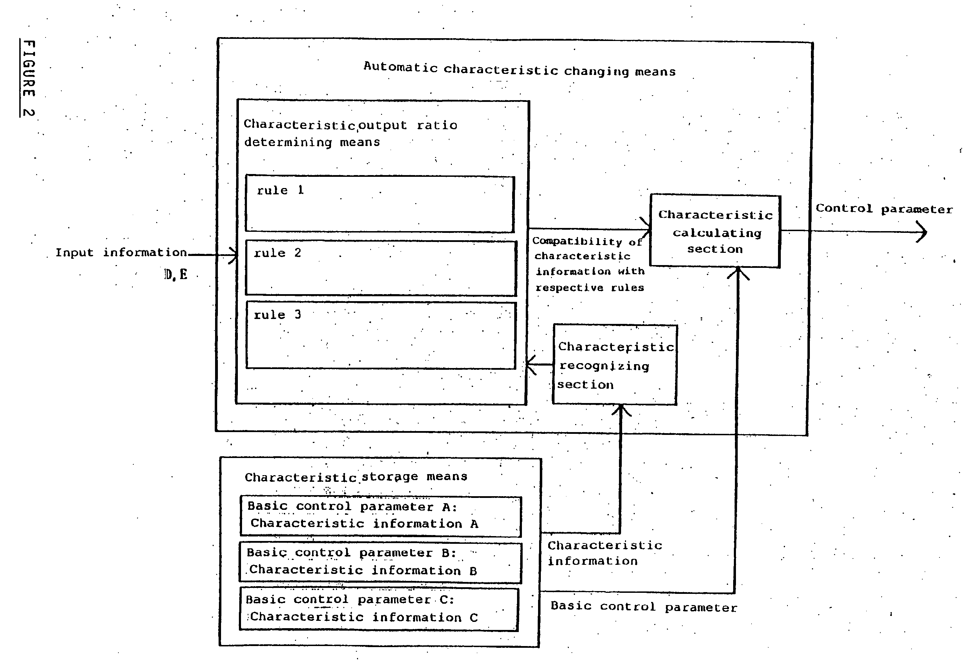

FIG. 2 is a general block diagram showing the constitution of the automatic characteristic changing means.

As shown in FIG. 2, the automatic characteristic changing means is made up of a characteristic recognizing section, a characteristic output ratio determining section, and a characteristic calculating section.

The characteristic output ratio determining section has a fuzzy rule, parameter (formula), or map constituted to be capable of relating the input information to the characteristic information of each basic control parameter, and determining the output ratio of each control parameter from the input information.

Here, an example of the characteristic output ratio determining section having a fuzzy rule will be explained. The characteristic output ratio determining section programs to judge the current characteristic of the control object obtained from the input information with the if-portion of the if-then sentence structure of programming language, and to determine according to the condition of the if-portion the output ratio of each basic control parameter with the then-portion of the sentence structure.

In concrete terms, for example, in case there are three basic control parameters and three pieces of information (characteristic information A, characteristic information B, and characteristic information C) corresponding to the three basic control parameters, and two pieces of input information (input D and input E) are inputted to the characteristic output ratio determining section, the rules may be determined as follows:

### (Example 1 of the fuzzy rule)

"If the input D is great and the input E is small, then the compatibility (of the current characteristic) with the characteristic information A is great."

"If the input E is small, then the compatibility (of the current characteristic) with the characteristic information B is small."

"If the input D is small and the input E is great, then the compatibility (of the current characteristic) with the characteristic information is great."

And the compatibility with each characteristic information determined as described above is outputted as the output ratio of the basic control parameter for each characteristic information to the characteristic calculating section.

Incidentally, in case the fuzzy rule is constituted as described above, the compatibility of the current characteristic (namely the input information) with each characteristic information is changed by changing the border of judging the input to the if-portion to be "great" or "small."

Therefore, in case the characteristic information includes for example information on different user or weather conditions, it is possible to constitute to prepare rules with the border position in the if-portion changed for every user or every weather condition, and use the rule corresponding to the information obtained from the characteristic recognizing section.

It is also possible to change the characteristic smoothly by constituting the characteristic output ratio determining section with plural fuzzy rules as described above.

The characteristic calculating section calculates the value of each basic control parameter from the map of the characteristic storage means on the basis of the information on the state measure contained in the input information, calculates and outputs the control parameter value to be applied to the basic control module on the basis of each calculated basic control parameter value and on the output ratio obtained from the characteristic output ratio determining section. In concrete terms, for example, in case the characteristic output ratio determining section is constituted with plural fuzzy rules as described above, the characteristic calculating section calculates control parameters to be applied to the basic control module with the compatibility weighted average of each basic control parameter.

As described above, the automatic characteristic changing means relates the input information (namely the current characteristic) to the characteristic information. Therefore, the types of input information to the automatic characteristic changing means are determined according to the types of information constituting the characteristic information of each basic control parameter stored in the characteristic storage means.

Therefore, the output ratio of the basic control parameter can be changed automatically with the combination of types of information constituting the characteristic information. While the combination can be changed at will, the following can be given as examples.
(a) A method in which the output ratio of the basic control parameter generated according to the preference of the user is changed according to the use condition.
(b) A method in which the output ratio of the basic control parameter generated according to the preference of the user is changed according to the physical condition of the user.
(c) A method in which output ratios of the basic control parameter are generated according to the preferences of different users, and the output ratios are changed according to the respective users.
(d) A method in which output ratios of the basic control parameter are generated according to the skill of different users, and the output ratios are changed according to the respective users.
(e) A method in which output ratios of the basic control parameter are generated according to use conditions, and the output ratios are changed according to the use conditions.
(f) A method in which output ratios of the basic control parameter are generated according to the physical conditions of the user, and the output ratios are changed according to the physical condition of the user.

In case the above method (a) is to be applied, the characteristic storing means stores a basic control parameter using the preference of the user and also sets information representing the use condition of a control object as characteristic information. The automatic characteristic changing means uses information that can be related to the information representing the use condition of the control object as input information, and both pieces of information are related to each other. In concrete terms, in case the control object is a motorcycle and the information representing the use condition is the running condition (such as a high speed run), the automatic characteristic changing means can use, as input information that can be related to the running characteristic, the vehicle speed and throttle opening changing rate, and both pieces of information are related to each other by the use of a fuzzy rule, a function, or a map.

In case the above method (b) is to be applied, the characteristic storing means stores a basic control parameter using the preference of the user and also sets, in addition to the use condition of the control object, information representing the physical condition of the user as characteristic information (such as "acceleration characteristic: low/body temperature... degrees/pulse rate ...," etc.). The automatic characteristic changing means, using information as input information that can be related to the information representing the use condition of the control object and to the information representing the physical condition of the user, and relates both pieces of information to each other. Incidentally, the information representing the physical condition of the user is not limited to body temperature and pulse rate mentioned above but may include various types of information such as the amount of perspiration, etc. These pieces of information representing the physical condition are detected with various sensors, and the detected values can be used as input information to the automatic characteristic changing means.

In case the above method (c) is to be applied, the characteristic storing means stores a basic control parameter using the preference of the user and also sets, in addition to the use condition of the control object, information representing the identity of the user as characteristic information (such as "running characteristic: low-acceleration/Yamaha Taro," etc.). The automatic characteristic changing means, using information as input information that can be related to the information representing the use condition of the control object and to the information representing the identity of the user, and relates both pieces of information to each other. In concrete terms, it may be constituted that the user identity is judged from the operation pattern of the user or that a characteristic measure (such as the fingerprint, iris pattern, etc.) of the user is detected with a sensor to identify the user from the detected value, or that the user is identified from an identification code inputted directly by the user.

In case the above method (d) is to be applied, the characteristic storing means stores a basic control parameter assuming the skill of the user and also sets, in addition to the use condition of the control object, information representing the identity of the user as characteristic information (such as "running characteristic: low acceleration/Yamaha Taro," etc.). The automatic characteristic changing means, assuming information that can be related to the information representing the use condition of the control object and to the information representing the identity of the user as input information, and relates both pieces information to each other.

In case the above method (e) is to be applied, the characteristic storing means stores a basic control parameter using the use condition of the control object and also sets the information representing the use condition of the control subject as the characteristic information. The automatic characteristic changing means users information that can be related to the information representing the use condition of the control subject and defines relationship between the two.

In case the above method (f) is to be applied, the characteristic storing means stores a basic control parameter using the physical condition of the user and also sets, in addition to the use condition of the control object, the information representing the physical condition of the user as the characteristic information (such as "acceleration characteristic/body temperature ... degrees/pulse rate ...," etc.). The automatic characteristic changing means uses information that can be related to the information representing the use condition of the control subject and to the information representing the physical condition of the user as input information, and defines relationship between the two pieces of information.

The user interface comprises a display means for displaying fuzzy rules to the user in case the automatic characteristic changing means changes characteristics, for example using the fuzzy rules. The display means functions also as a user interface for manipulating characteristic changing conditions (for example fuzzy rules) in the automatic characteristic changing means. Specific constitution of the user interface will be described later more in detail in reference to an embodiment.

The above-described constitution is an example in which the characteristic control device is incorporated in the control device having the basic control module. However, another constitution is also possible in which the characteristic control device is constituted separately from the control device having the basic control module.

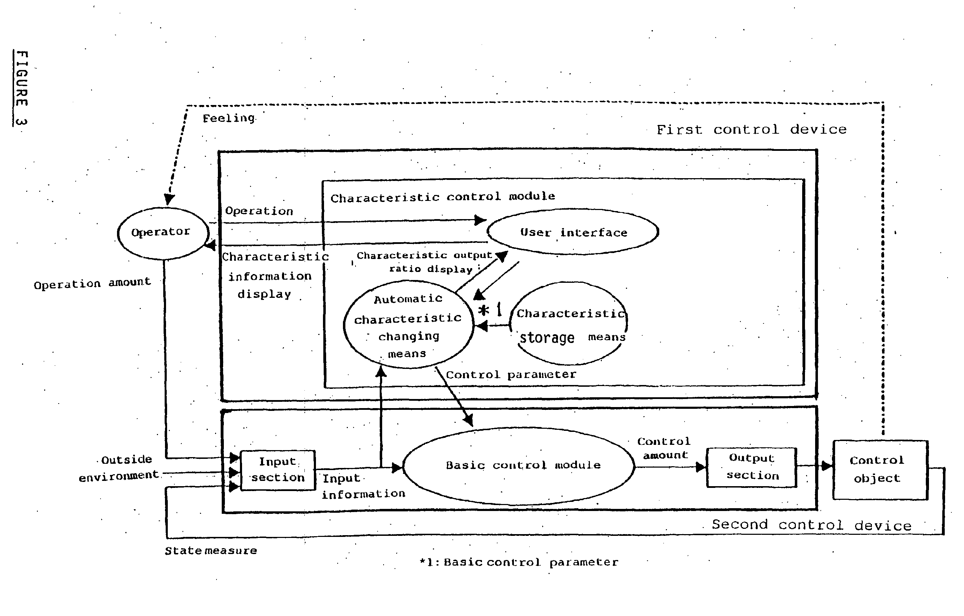

FIG. 3 is a general block diagram of a constitution in which a control device having a basic control module is used as a first control device incorporated in the control object, and a characteristic control device is used as a second control device, with both control devices constituted separately from each other.

As shown in the figure, the first control device has a basic control module that calculates the control amount of the control object on the basis of input information (amount of manipulation by the user, information obtained from outside environment, state measure of the control object obtained from the control object) supplied through an input section, and that controls the control object through an output section.

The second control device comprises:
an characteristic storage means for storing plural basic control parameters;
an automatic characteristic changing means for automatically determining output ratios of plural basic control parameters stored in the characteristic storage means according to specified input information, and for calculating and outputting control parameters to be applied to the basic control module on the basis of the determined output ratios; and
a user interface for displaying a characteristic change condition in the automatic characteristic changing means and for operating the characteristic change condition.

Since the processing means provided in the first and second control devices are the same as those provided in the first embodiment shown in Fig. 1, detailed description of them is omitted.

In most cases, the control device having the basic control module is installed in products, the control objects. Therefore, when the characteristic control device is separately provided as described above, it is possible to perform complicated calculation process on the characteristic control device side. This makes it possible to simplify the control device installed in the control object, which in turn reduces the cost of the product itself.

When a user owns plural products as shown in flag. 4, a product is used while other products are not used. For example, in case the user owns two motorcycles, or a motorcycle and a car, one is used while the other is not used. In such a case, when the characteristic control device is constituted as a separate item, it is possible to customize or control the characteristics of plural control objects with a single characteristic control device. Therefore, it is possible to save the number of the characteristic control devices because only one characteristic control device suffices for the purposes of plural control objects.

The separate constitution of the characteristic control device also eliminates restrictions in manufacture and makes it possible to use a general purpose computer as a characteristic control device.

The possibility of using a general purpose computer as the characteristic control device as described above makes it unnecessary for the user to learn operation processes for every product, makes it possible to customize and control the characteristics of various products through simplified processes with the familiar computer. It is also possible to change only the product (the control object) or the characteristic control device. This is very effective for different products of different life cycles such as an engine-operated vehicle and a computer.

When the characteristic control device is constituted separately, it may be constituted to be attachable to and removable from the control device having a basic control module, and to be operable irrespective of being attached to or removed from the control device. In that case, it is also possible to use a wireless interface between the characteristic control device and the control device to simplify the removal and attachment of the characteristic control device.

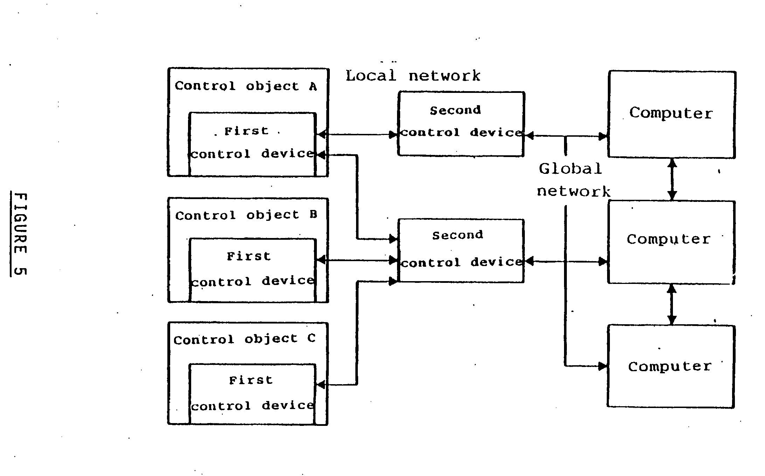

In that case, it is also possible for the characteristic control device as a single unit to generate and change the characteristic of the basic control module and also, as shown in FIG. 5, to communicate with other computers through a network. In this way, it is possible to receive and send out various characteristic information, and obtain information on use conditions such as positioning and weather conditions through the network.

In case a separate computer is used as a characteristic control device and a computer is connected to a network as described above, it is possible for the computer as the characteristic control device to play the role of a firewall. This makes it possible to constitute a system of high performance and reliability as a whole with a global network capable of gaining access over a wide range to receive and send out versatile data, and with a local network capable of receiving and sending out only the information required for control with a high level of security. This has another advantage that even in case connection to a global network is impossible due to geographical environment, the characteristic of the basic control module can be changed with the local network only.

Incidentally, the above global network may be constituted with the Internet. Also, if the control object has an interface capable of directly connecting to the Internet, the local network may also be constituted utilizing the Internet.

In case the characteristic control device is constituted separately from the control device having the basic control module, it is necessary to provide fail-safe function on the basic control module side to compensate for communication errors and to protect the basic control module side in case the calculated values of the characteristic control device exceed the permissible limit of the control object.

Moreover, when a characteristic is changed with the characteristic changing means, a display means may be provided to convert the measure of the characteristic into an image to use it as a yardstick for evaluating the characteristic.

The above explanation of the characteristic control device of this embodiment is made by way of a general example without referring to a specific control object. In the following, however, a more specific example will be explained in which the characteristic control device is the running characteristic control device of a specific control object, a motorcycle.

An electronic throttle device has a throttle valve for controlling the intake air rate of an engine. The throttle valve of the electronic throttle device is driven according to the accelerator operation amount, the input amount given by a rider. The characteristic of vehicle drive feeling is changed by controlling the characteristic of the electronic throttle device.

There are two characteristics that can be changed with the electronic throttle device: static characteristic and dynamic characteristic.

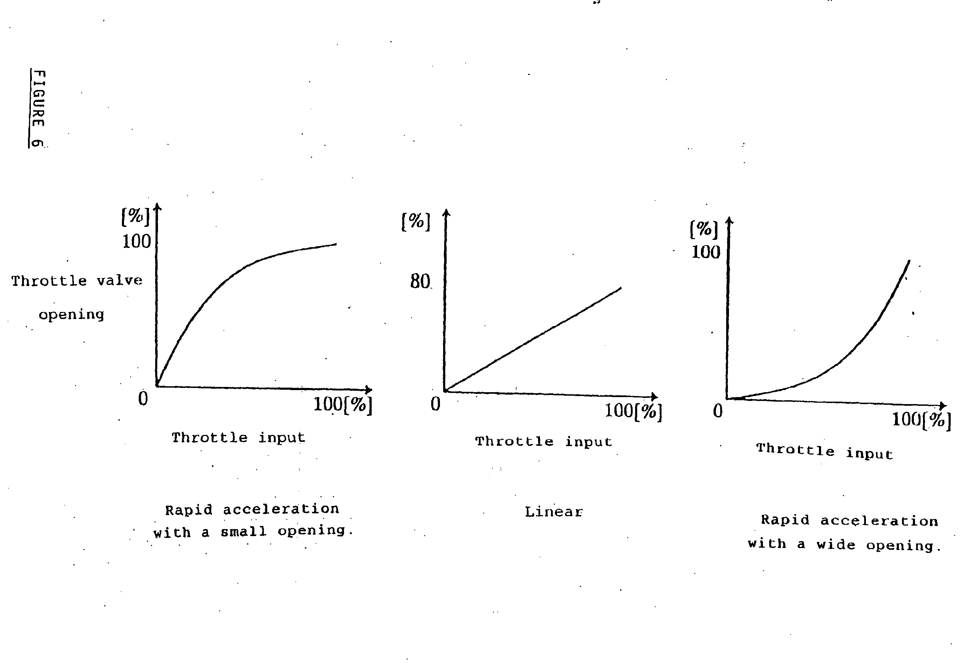

The static characteristic is the throttle valve opening when the throttle device input is constant and affects the stationary running characteristic of a vehicle. A few typical static characteristics are shown in FIG. 6. The static characteristic maybe represented with any function if the throttle valve opening or output is zero when the throttle device input is zero. Changing the static characteristic of the throttle valve opening makes it possible to realize different throttle openings with the same throttle device input.

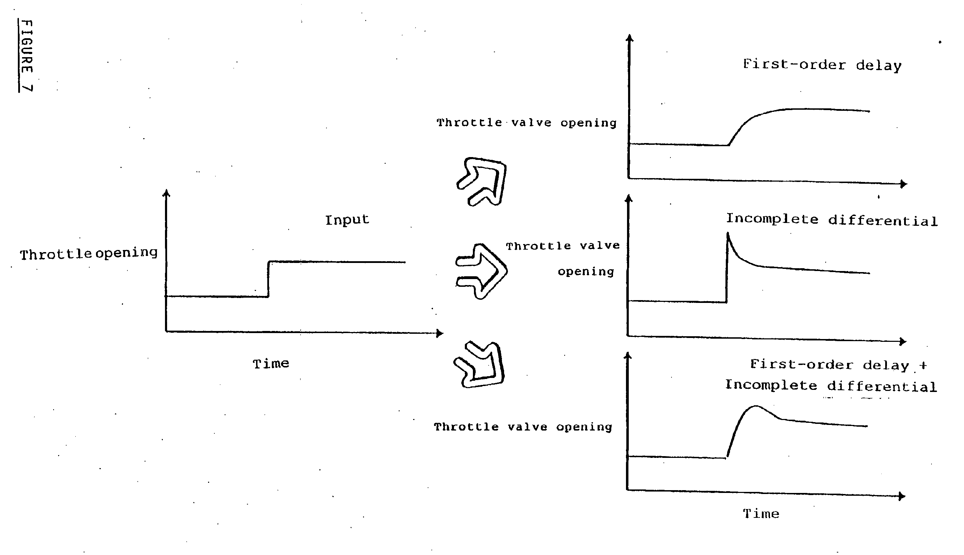

The dynamic characteristic is the relation between the change in the throttle device input and the change in the throttle valve opening, and affects the transient characteristic of the vehicle. Concretely, a first-order delay filter is combined with an incomplete differential filter and their parameters are changed. FIG.7 shows the relation between the throttle device input and the throttle valve opening when the dynamic characteristic is changed.

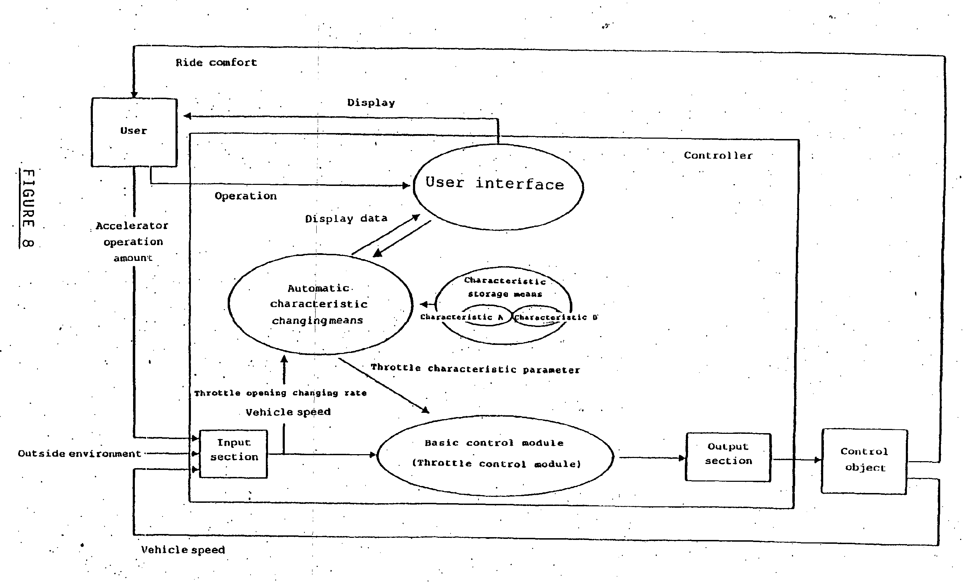

FIG.8 is a general block diagram of a running characteristic control device of a motorcycle to which a characteristic control device is applied. As shown, the running characteristic control device comprises a throttle control module for determining the control output for the throttle valve by the use of a throttle characteristic parameter, a characteristic generating means for controlling the throttle characteristic parameter, a characteristic storage means, and an automatic characteristic changing means.

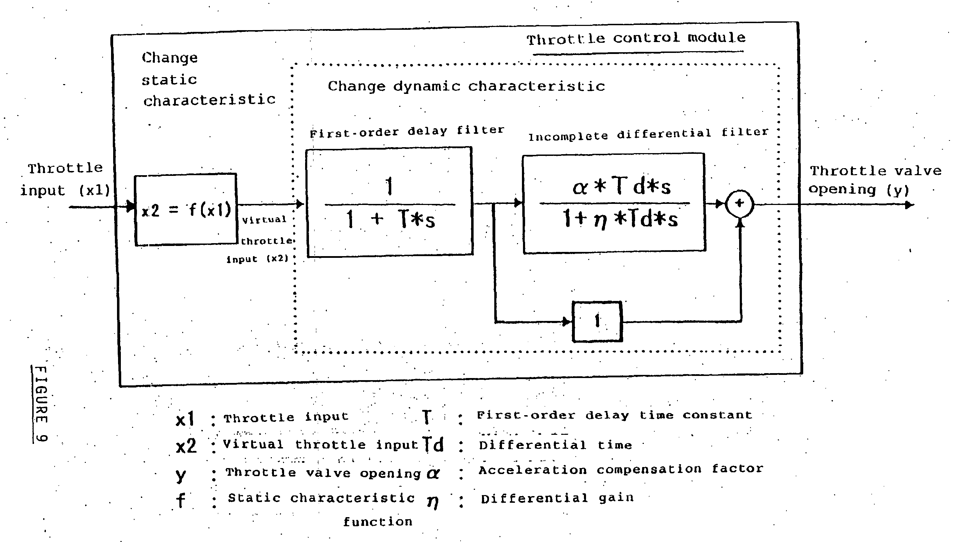

The throttle control module determines the throttle valve opening from the throttle input on the basis of the throttle characteristic parameter. This module simultaneously changes the static and dynamic characteristics. FIG.9 is a block diagram of the throttle control module. As shown, this throttle control module has a static characteristic changing section and a dynamic characteristic changing section. The static characteristic changing section converts a throttle input to a virtual throttle input. The dynamic characteristic changing section determines a throttle valve opening from the virtual throttle input. The characteristic parameters used in this embodiment are; the small opening static characteristic, the wide opening static characteristic, the first-order delay time constant, and the differential gain.

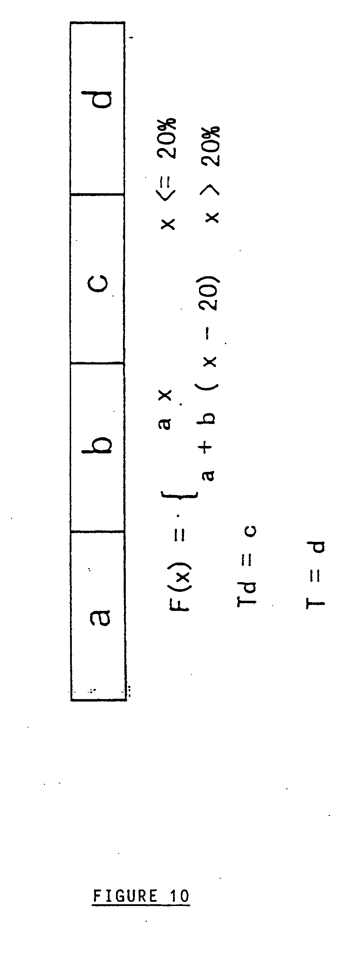

In the characteristic storage means, plural kinds of basic throttle parameters for determining running characteristic are stored along with characteristic information. FIG.10 is a conceptual drawing of basic throttle characteristic parameters stored in the characteristic storage means. In the figure, a and b are parameters related to the static characteristic function f (x), c is a differential time Td related to the dynamic characteristic, and d is a first-order delay time constant T related to the dynamic characteristic.

In this embodiment, the characteristic information relates to "running characteristic." Each piece of information is provided with pieces of information related to the running characteristic such as; "running characteristic: high speed running characteristic," "running characteristic: low speed running characteristic," "running characteristic: winding running characteristic," "running characteristic: acceleration running characteristic," etc.

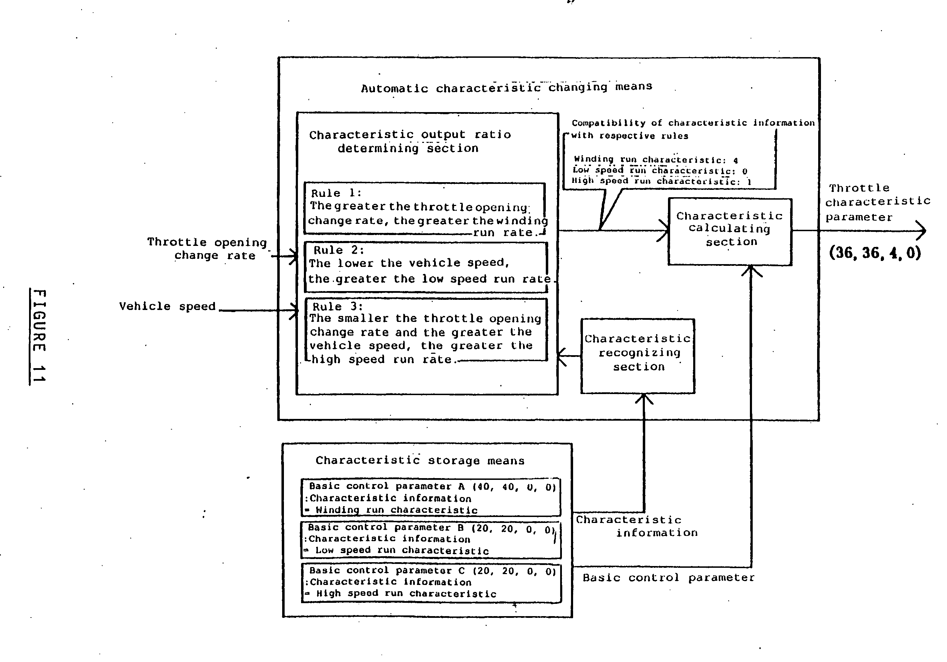

Next, the automatic characteristic changing means will be described. FIG.11 shows a block diagram of the automatic characteristic changing G means. As shown, the automatic characteristic changing means comprises; a characteristic recognizing section, a characteristic output ratio determining section, and a characteristic calculating section.

The characteristic output ratio determining section has a fuzzy rule constituted to be capable of relating the input information to the characteristic information of each basic control module and determining from the input information the output ratio of each basic control parameter.

In concrete terms, for example, it is assumed that the following are stored in the characteristic storage means:
Basic control parameter A: characteristic information (running characteristic: winding run characteristic).
Basic control parameter B: characteristic information (running characteristic: low speed run characteristic).
Basic control parameter C: characteristic information (running characteristic: high speed run characteristic).

Using the throttle change rate and the vehicle speed as the input information to the characteristic output ratio determining section, the fuzzy rules in the characteristic output ratio determining section can be created as follows:
- Rule 1:: "the greater the throttle change rate, the greater the winding run rate."
- Rule2:: "lower the speed, the greater the low speed run rate."
- Rule 3:: "the smaller the throttle change rate and higher the speed, the greater the high speed run rate."

The characteristic output ratio determining section uses the above-described fuzzy rules to obtain the compatibility of the current characteristic with each piece of characteristic information and outputs it to the characteristic calculating section.

The characteristic calculating section calculates the values of respective basic control parameters A, B, and C from the map of the characteristic storage means on the basis of the information on the state measure contained in the input information, calculates the compatibility weighted average of the basic control parameter values using the values of compatibility with respective pieces of characteristic information inputted from the characteristic output ratio determining section, and outputs the calculated value as the throttle characteristic parameter to be applied to the basic control module.

In concrete terms, as shown in FIG. 11 for example, if the values of the basic control parameter A (winding run characteristic) stored in the characteristic storage means are (40, 40, 0, 0), the values of the basic control parameter B (low speed run characteristic) are (20, 20, 0, 0), and the values of the basic control parameter C (high speed run characteristic) are (20,20,0,0), the values of compatibility with the respective rules of the information obtained from the characteristic output ratio determining section are 4 for the winding run characteristic, 0 for the low speed run characteristic, and 1 for the high speed run characteristic, then the values of the throttle characteristic parameter outputted from the characteristic calculating section become (36, 36, 4, 0)

Next, details of the user interface will be described.

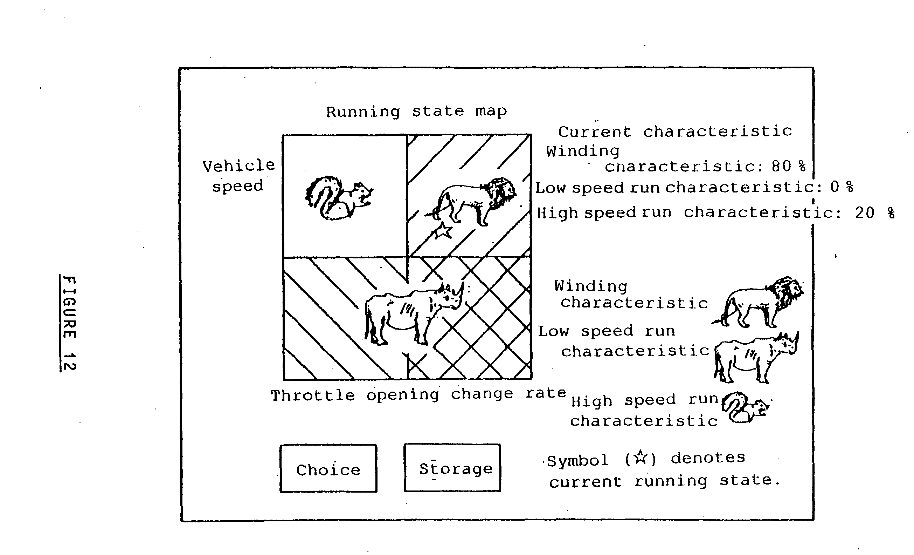

FIG.12 shows an example of user interface for displaying the rules in the form of a map. In the figure, the symbol of the "lion" corresponds to the characteristic information of the basic control parameter A. The symbol of the "squirrel" corresponds to the characteristic information of the basic control parameter B. The symbol of the "rhinoceros" corresponds to the characteristic information of the basic control parameter C. The value of the border line defining the regions of symbols can be used to determine whether the value of input information is "great" or "small" in the if-portion of the fuzzy rule. The symbol ( 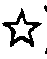 ) indicates the current position of characteristic obtained from the input information. Indicating the relation between the fuzzy rule and the current characteristic with the map using the images (lion, squirrel, and rhinoceros) of represented objects for intuitive perception of the characteristics of the basic parameters enables the user to know visually or intuitively the change in and the position of the current characteristic.

This user interface is constituted that the positions of border lines defining the regions of respective symbols or the positions of the symbols themselves by dragging and dropping. This enables the user to optionally change the if-portion of the fuzzy rule. It is constituted that changing the positions of symbols themselves makes it possible to change the central positions of plotting the characteristics, and that determining the border line positions for determining the regions of symbols makes it possible to change the plotting widths of the characteristics.

It is also possible for the user to perform initial setting of the characteristic change condition of the automatic characteristic changing means using the user interface.

Examples of steps of the initial setting by the user using the user interface are shown below.
1. Using a choice button, choose a throttle basic characteristic parameter out of a set of basic characteristic parameters, apply it to the basic control module to control a control object, and confirm its feeling.
2. Repeat the step 1 until a satisfactory characteristic comes out.
3. Plot the satisfactory characteristic on a running condition map using the memory button. In this way, the use condition in the automatic characteristic changing means is related to the basic characteristic parameter. The central position of plotting is determined with the average value of the running condition data when the vehicle is driven with the characteristic. The plotting width is determined with the dispersion of the running condition data when the vehicle is driven with the characteristic.
4. If the characteristic is unsatisfactory when the running condition changes, repeat the steps 1 to 3.
5. If fine adjustment of characteristic plotting is necessary change the characteristic by directly manipulating the running condition map.

It is also possible to automate the initial setting of the characteristic change condition using the user interface.

An example of automatically performing the initial setting of the characteristic change condition of the automatic characteristic changing means in steps is shown below.
1. Using a choice button, choose a throttle basic characteristic parameter out of a set of basic characteristic parameters, apply it to the basic control module to control a control object, and confirm its feeling.
2. Repeat the step 1 until a satisfactory characteristic appears.
3. The user continues running the vehicle with the satisfactory characteristic until the running condition changes. The system plots the characteristic being used in running on the running condition map at constant time intervals. The central position of plotting is determined with the mean value of the running condition data when the vehicle is run with the characteristic. The plotting width is determined with the dispersion of the running condition data when the vehicle is run with the characteristic.
4. If the characteristic is unsatisfactory when the running condition changes, repeat the steps 1 to 3.
5. If fine adjustment of characteristic plotting is necessary change the characteristic by directly manipulating the running condition map.

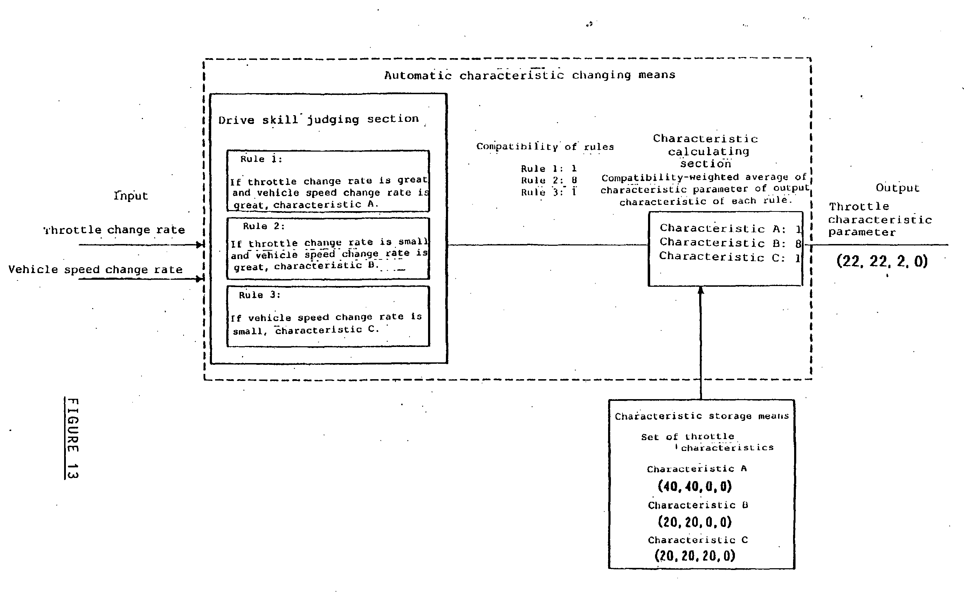

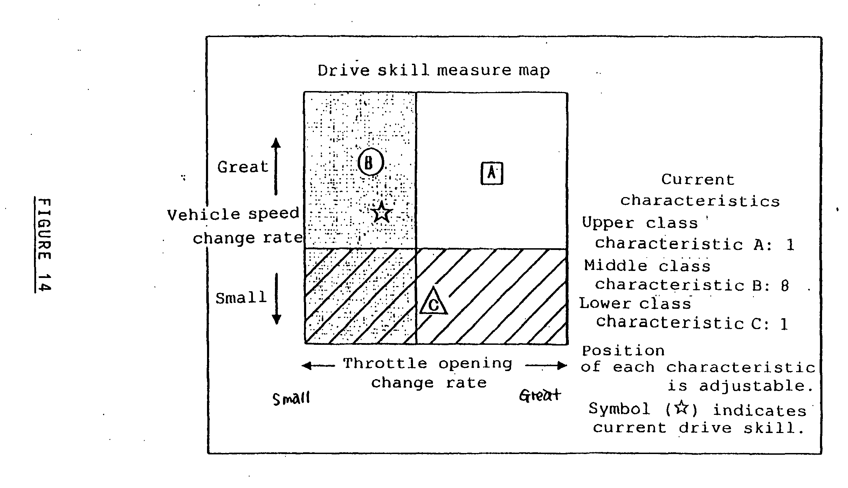

The above embodiment is explained as an example of changing the characteristics according to the vehicle running condition. However, the characteristic changing means permits to change the characteristics according to various conditions. In this case, it is conceivable for example to arrange that a designer prepares plural basic control parameters corresponding to various skill levels of the driver, pieces of characteristic information corresponding to the driving skill levels are set to respective basic control parameters, and the output ratios of the characteristics are changed according to the skill level of the driver the system estimated. The estimation of the driver's skill is made using the throttle opening change rate and the vehicle speed change rate within a certain period of time in the past. A novice driver cannot drive nimbly, with less changes in the above-mentioned rates. As the skill improves, the driver becomes able to do much acceleration and deceleration and so it is possible to estimate the skill level from the change rates. FIG. 13 shows an example constitution of automatic characteristic changing means corresponding to the skill level. In this case, the user interface is as shown in FIG. 14. In the figure, the positioning of the basic control parameters in the drive skill measure map can be preset by the designer, and can be adjusted by the user. In this case, the amount of adjustment made by the user may be restricted by the designer to some extent. In this way, a novice user is prevented from unreasonably proceeding to the characteristic for higher level of users by adjusting the drive skill measure map.

The above embodiment relates to changing the characteristic of the electronic throttle device of the motorcycle. However, the object characteristic of the motorcycle to be changed is not limited to that in the above embodiment but may be fuel injection characteristic, gas pedal-off deceleration characteristic, or exhaust noise characteristic, etc. As to the control object, it is not limited to the motorcycle but any other control object may be chosen for changing characteristics according to preference, skill, use condition, etc. of the user, as a matter of course.

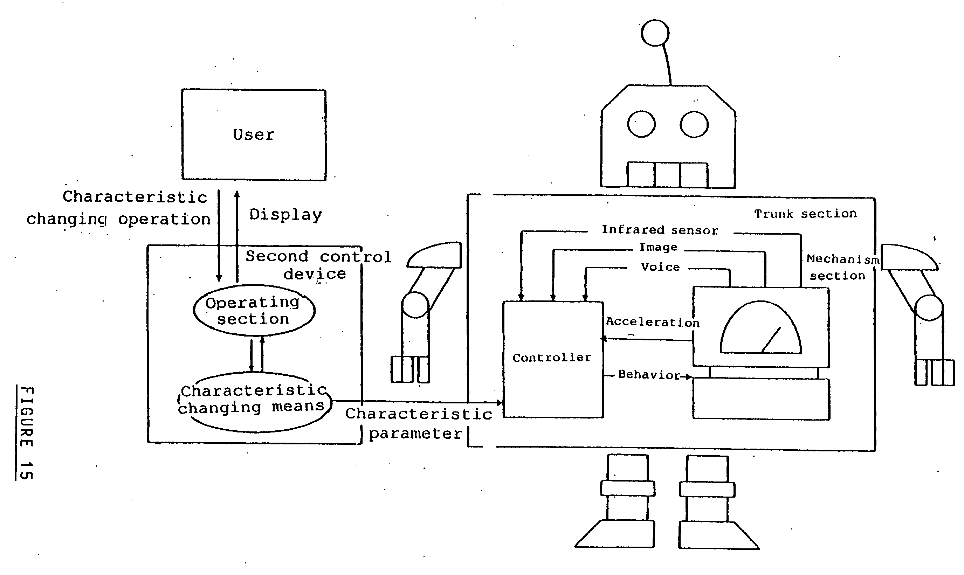

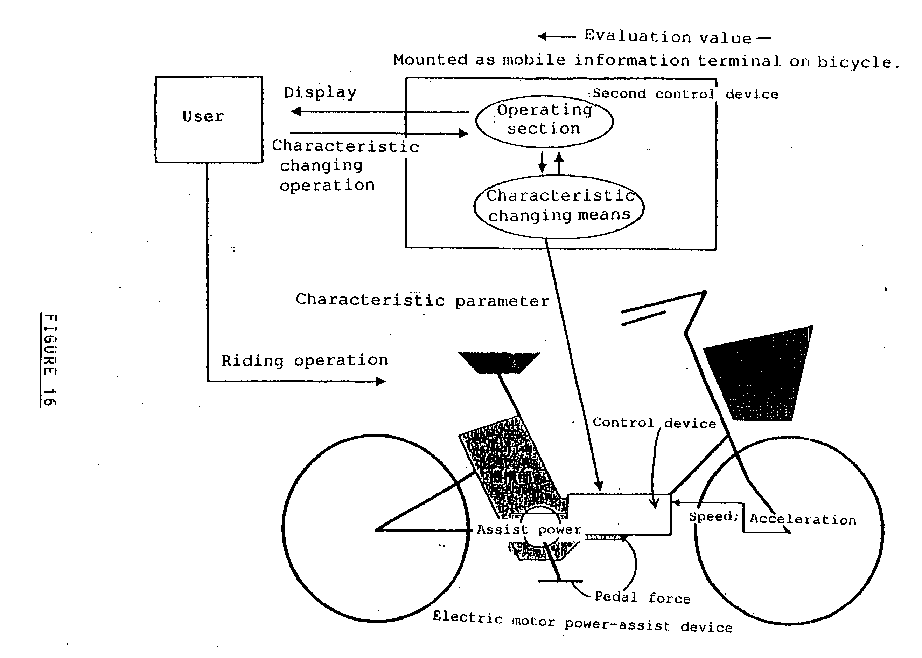

In concrete terms, the control object may be a robot as shown in FIG. 15 to automatically change interactive speech and behavior' of the robot according to the user's preference or the environment in which the robot is used. Or, the control object may be an electric motor-assisted bicycle as shown in FIG. 16 to cause an assist ratio to be outputted constantly matching the change in the use environment, user's age and physical size, travel distance, etc. Or, the control object may be an electric motor power-assisted wheelchair, or an electric motor-operated vehicle.

As described above, the characteristic control of an embodiment includes a basic control module for determining a control amount for controlling the output of the control object on the basis of specified input information and the control parameter for relating the input information to an output given relative to the input information to the control object, further comprises:
a characteristic storage means for storing the basic control parameter, and an automatic characteristic changing means for determining according to a specified condition and automatically changing the control parameter to be applied to the basic control module according to the basic control parameter stored in the characteristic storage means and according to the input information. Therefore, an effect is provided that the characteristic of the control object can be made to match flexibly and finely the use conditions of the control object such as the user's skill and preference and the use environment.

By arranging the automatic characteristic changing means to make it possible to change the ratios of the basic control parameters using fuzzy rules and to automatically change the control parameters applied to the basic control module, another effect is provided that the characteristics are changed smoothly so the control object does not behave to give uncomfortable feeling to the user when the characteristics are changed.

Providing a user interface means for permitting the user to directly change fuzzy rules in the automatic characteristic changing means makes it possible to match the characteristics of the control object more accurately with the preference of the user.

Providing the user interface means with a display device for displaying to the user the basic control parameters to be changed with fuzzy rules in the automatic characteristic changing means permits the user to intuitively understand changes in the characteristics.

Moreover, the characteristic control device of an embodiment comprises a characteristic control module for controlling the characteristics of control parameters is constituted separately from a control device comprising a basic control module for determining the control amount of the output of a control object on the basis of specified input information and the control parameters for relating the input information to an output given according to the input information to the control object. The characteristic control device comprises a characteristic storage means for storing the basic control parameters and (an automatic characteristic changing means) for determining on the basis of the basic control parameters stored in the storage means and the input information and (for automatically changing) the control parameters to be applied to the basic control module, and an automatic characteristic changing means for determining according to a specified condition and automatically changing the control parameter to be applied to the basic control module according to the basic control parameter stored in the characteristic storage means and according to the input information. Therefore, various remarkable effects are provided. For the user, the range of choosing a product becomes wider: whether or not the user needs the characteristic control device can be chosen at the time of purchasing the product, or the characteristic control device can be retrofitted. Since the characteristic control device can be attached or removed at will, the user can customize the characteristic at anyplace. It is also possible to change characteristics of plural control objects of a single type or plural types of control objects. It is also possible to simply replace only the control object or the characteristic control device.

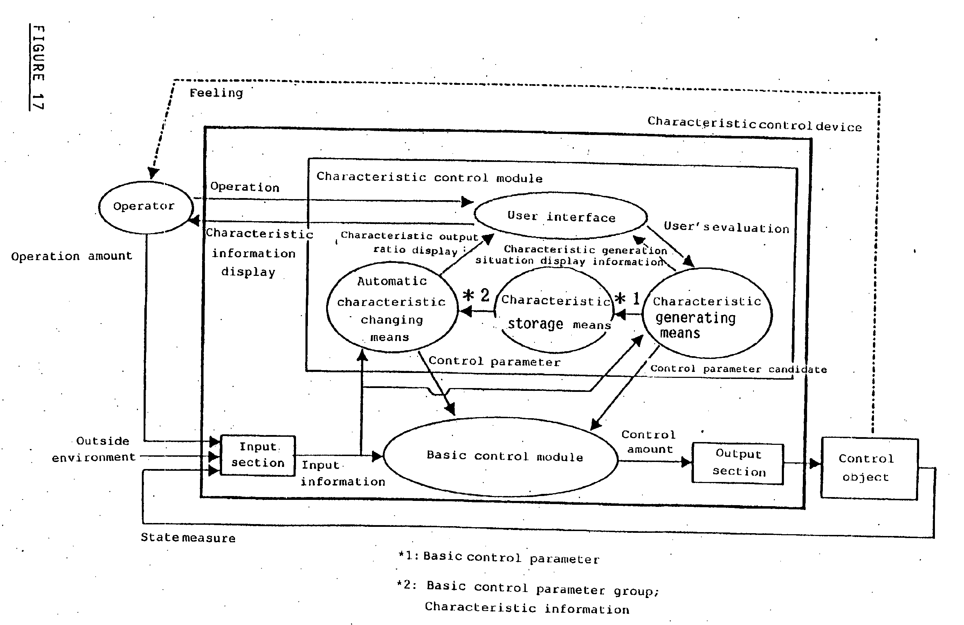

FIG. 17 is a general block diagram of a control device comprising a characteristic control device of a second basic embodiment.

As shown in the figure, this control device comprises;
a basic control module which calculates the control amount of a control object on the basis of input information (the amount of operation by a user, information obtained from the outside environment, the measure of state of the control object obtained from the control object, etc.) inputted through an input section, and controls the control object through an output section,
a characteristic generating means for generating a basic control parameter (a basic characteristic) according to a specified evaluation standard,
a characteristic storage means for storing the basic control parameter generated with the characteristic generating means, and
an automatic characteristic changing means which automatically determines the output ratio of plural basic control parameters stored in the characteristic storage means according to specified input information, calculates a control parameter to be applied to the basic control module on the basis of the determined output ratio, and outputs the control parameter.

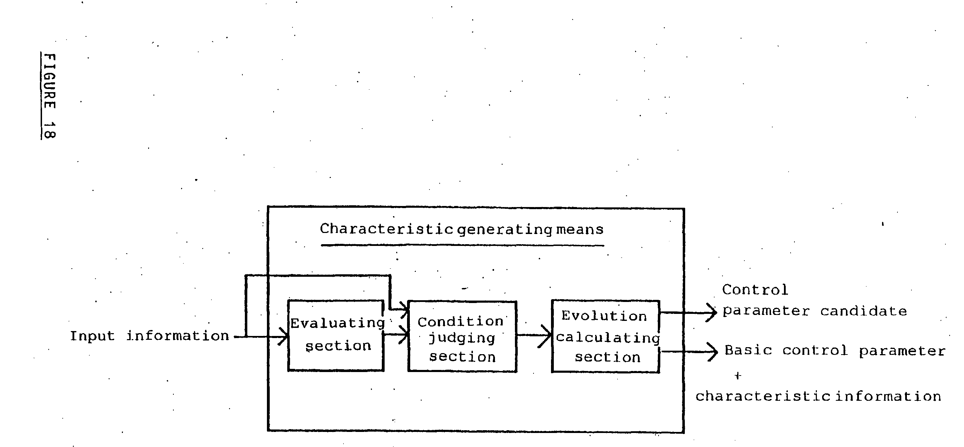

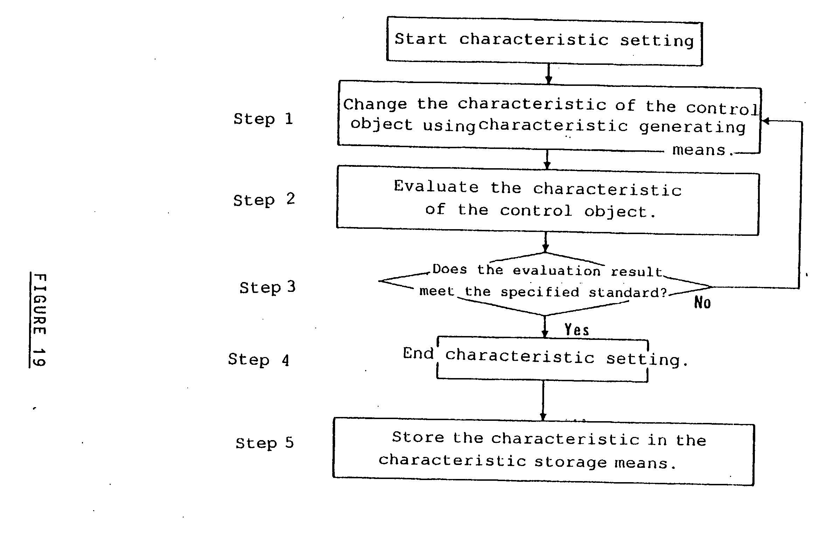

Here the constitution and function of the above-described characteristic generating means are described in reference to FIGs. 18 and 19.

FIG. 18 is a general block diagram showing the constitution of the characteristic generating means. FIG. 19 is a general flowchart showing the flow of processes from the characteristic generating process with the characteristic generating means to the characteristic storing process with the characteristic storage means.

As shown in FIG. 18, the characteristic generating means is made up of an evaluating section, a condition judging section, and an evolution calculating section.

The evolution calculating section generates plural basic control parameter candidates (hereinafter called control parameter candidates) using for example an evolutionary calculation method, and the evaluating section evaluates these control parameter candidates on the basis of specified input information. The condition judging section judges at least the use condition of the control object (if the control object is a motor cycle for example, the running characteristic) when the control parameter candidates are generated with the evolution calculating section and gives the result as characteristic information to each control parameter candidate.

In this way, the characteristic generating means repeats generation and evaluation of control parameter candidates and, when a control parameter candidate is obtained that meets the specified evaluation standard, outputs the control parameter candidate as a basic control parameter together with its characteristic information to the characteristic storage means. The characteristic storage means maps the basic control parameter and the characteristic information according to the measure of state when the basic control parameter is generated.

The "characteristic information" can be constituted by adding any appropriate information to the use condition of the control object when the parameter candidates are generated as described above. To put it concretely for example, if the running state of a motorcycle as a control object is in acceleration when the control parameter candidates are generated, the characteristic information is "acceleration characteristic" or "acceleration + its level (for example, acceleration state: low/medium/high." To the characteristic information may be further added the identity of the user (for example, Mr./Ms. A, B, etc.), physical condition of the user (for example, body temperature, pulse rate, etc.), skill of the user (for example, the period since the user got a driver's license), or the use environment of the control object (for example, location, weather, time, etc.). As a result, the characteristic information is given in detailed form such as "acceleration state: low when the body temperature of Mr. A is ** °C, pulse rate is **, and weather is clear).

The characteristic storage means can store the basic control parameter in increased number of maps according to the number of pieces of information that constitute the characteristic information. To put it concretely, the basic control parameter can be stored using plural maps for the running characteristic for different users, or using plural maps for the running characteristic according to different weather conditions.

There can be two methods of evaluating the control parameter candidates described above: one in which the evaluation of the characteristic is in putted directly by the user using an appropriate interface to obtain an evaluation value (See dotted line in FIG. 17), and the other in which a function stored in advance in the characteristic generating means is used to automatically calculate an evaluation value from the manipulating condition and manipulation history of the user. The former method has the effects of the user's intention being greatly reflected on the characteristic generation and the user being given the pleasure of intervening in the generation of the characteristic of the control object. The latter method has the effect of alleviating the burden on the user in generating the characteristic. These methods can be chosen according to the type of the control object, the age bracket of the user of the control object, etc.

The evaluating section in FIG. 18 uses the latter method and is constituted that the amount of manipulation by the user after the control object is actually controlled using the control parameter candidate is inputted as input information, and the control parameter candidate is evaluated on the basis of the change in the amount of manipulation by the user. To put it concretely, for example, if no change is seen in the amount of manipulation by the user even after the control object is actually controlled with the control parameter candidate, it can be judged that the user is satisfied with the characteristic obtained with the control parameter candidate. On the contrary, if any change is seen in the amount of manipulation by the user, it can be judged that the user is going to change the characteristic by his own manipulation because the user is not satisfied with the characteristic obtained with the control parameter candidate. Therefore, for example, it is possible to determine the evaluation value of each control parameter candidate by making the amount of change in the amount of manipulation by the user to correspond to the evaluation value.

The flow of process from generating the characteristic with the characteristic generating means to storing the characteristic in the characteristic storage means will be described in reference to the flowchart of FIG. 19.

As shown in the figure, the characteristic generating means begins to set the characteristic on the basis of a predetermined appropriate trigger (for example, an instruction by the user, change in the use condition, periodical time, etc.). When the characteristic setting is begun, the evolutionary calculation section of the characteristic generating means generates plural control parameter candidates and gives characteristic information judged with the condition judging section to each control parameter candidate. The evolutionary calculation section outputs one of the control parameter candidates to the basic control module to change the characteristic of the control object, namely the control parameter of the basic control module, to the above-mentioned control parameter candidate (step 1).

Next, using the control parameter candidate, the control object is controlled with the basic control module, and its characteristic is evaluated (step 2).

In concrete terms, the basic control module calculates the control amount on the basis of the control parameter candidate obtained from the characteristic generating means, and outputs the result to the control object through the output section. The control object, upon receiving the control output, operates according to the control amount. The state measure at this time is detected. The operator feels some feeling from the operating state at the time. On the basis of the feeling, the operator gives a new manipulation amount to the control device. At the same time, the state measure is inputted, and its information is inputted to the characteristic generating means. As a result, the characteristic generating means evaluates the input information, and repeats the above steps 1 and 2 until a predetermined evaluation standard is met (step3), and ends the characteristic setting process when a control parameter candidate that meets the evaluation standard is obtained (step 4). Then the characteristic generating means outputs the control parameter candidate as the basic control parameter together with the characteristic information to the characteristic storage means. The characteristic storage means maps the basic control parameter together with the characteristic information (step 5).

Next, the constitution of the automatic characteristic changing means will be briefly described.

The automatic characteristic changing means calculates from the plural basic control parameters stored in the storage means a single control parameter to be applied to the basic control module, and changes the control parameter of the basic control module at appropriate time intervals. The appropriate time intervals are determined, for example, with changes in the use condition, in preset control cycle, etc.

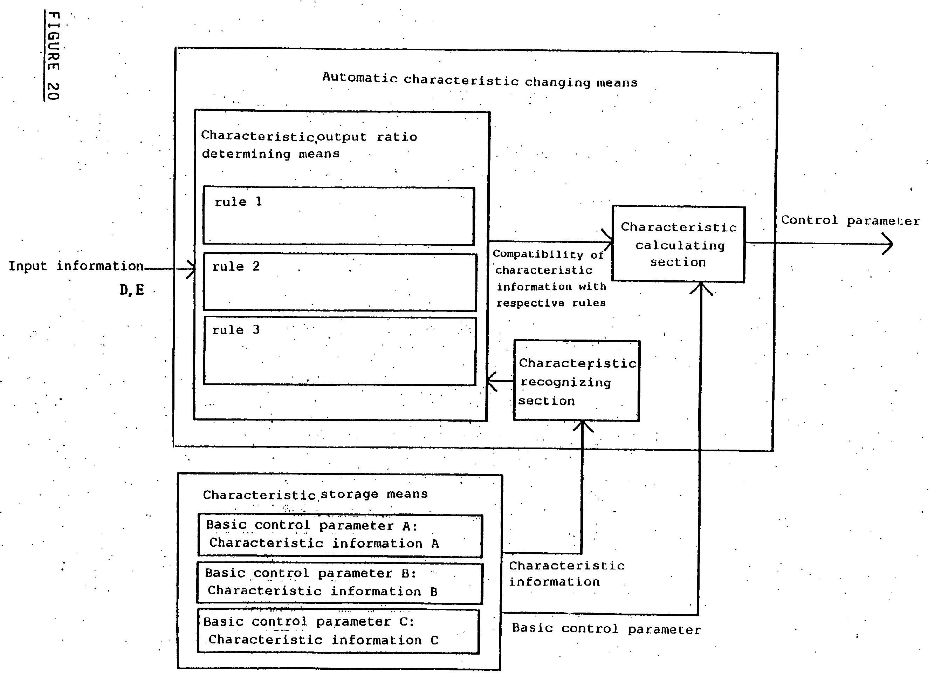

FIG. 20 is a general block diagram showing the constitution of the automatic characteristic changing means. Said automatic characteristic changing means is similar to the automatic characteristic changing means of the first basic embodiment.

As shown in FIG. 20, the automatic characteristic changing means is made up of a characteristic recognizing section, a characteristic output ratio determining section, and a characteristic calculating section.

The characteristic output ratio determining section has a fuzzy rule, parameter (formula), or map constituted to be capable of relating the input information to the characteristic information of each basic control parameter, and determining the output ratio of each control parameter from the input information.

Here, an example of the characteristic output ratio determining section having a fuzzy rule will be explained. The characteristic output ratio determining section programs to judge the current characteristic of the control object obtained from the input information with the if-portion of the if-then sentence structure of programming language, and to determine according to the condition of the if-portion the output ratio of each basic control parameter with the then-portion of the sentence structure.

In concrete terms, for example, in case there are three basic control parameters and three pieces of information (characteristic information A, characteristic information B, and characteristic information C) corresponding to the three basic control parameters, and two pieces of input information (input D and input E) are inputted to the characteristic output ratio determining section. The rules may be determined as follows:

### (Example 1 of the fuzzy rule)

"If the input D is great and the input E is small, then the compatibility (of the current characteristic) with the characteristic information A is great."

"If the input E is small, then the compatibility (of the current characteristic) with the characteristic information B is small."

"If the input D is small and the input E is great, then the compatibility (of the current characteristic) with the characteristic information is great."

And the compatibility with each characteristic information determined as described above is outputted as the output ratio of the basic control parameter for each characteristic information to the characteristic calculating section.

Incidentally, in case the fuzzy rule is constituted as described above, the compatibility of the current characteristic (namely the input information) with each characteristic information is changed by changing the border of judging the input to the if-portion to be "great" or "small."

Therefore, in case the characteristic information includes for example information on different users or weather conditions, it is possible to constitute to prepare rules with the border position in the if-portion changed for every user or every weather condition, and use the rule corresponding to the information obtained from the characteristic recognizing section.

Since the basic control parameters are generated in succession in the characteristic generating section, the number of pieces of the characteristic information increases accordingly. Therefore, in the characteristic output ratio determining section, the characteristic recognizing section recognizes a new characteristic information every time a new basic control parameter is generated in the characteristic generating section, and performs the creation and deletion of rules and the change in the then-portion of the rule so as to adapt to the new characteristic information. The creation, deletion, or changing the fuzzy rule maybe automated, so that the burden on the user related to the automatic change in the characteristic can be alleviated.

It is also possible to change the characteristic smoothly by constituting the characteristic output ratio determining section with plural fuzzy rules as described above.

The characteristic calculating section calculates the value of each basic control parameter from the map of the characteristic storage means on the basis of the information on the state measure contained in the input information, calculates and outputs the control parameter value to be applied to the basic control module on the basis of each calculated basic control parameter value and on the output ratio obtained from the characteristic output ratio determining section. In concrete terms, for example, in case the characteristic output ratio determining section is constituted with plural fuzzy rules as described above, the characteristic calculating section calculates control parameters to be applied to the basic control module with the compatibility weighted average of each basic control parameter.

As described above, the automatic characteristic changing means relates the input information (namely the current characteristic) to the characteristic information.
Therefore, the types of input information to the automatic characteristic changing means are determined according to the types of information constituting the characteristic information of each basic control parameter determined with the characteristic generating means.

Therefore, the output ratio of the basic control parameter can be changed automatically with the combination of types of information constituting the characteristic information. While the combination can be changed at will, the following can be given as examples.
(a) A method in which the output ratio of the basic control parameter generated according to the preference of the user is changed according to the use condition.
(b) A method in which the output ratio of the basic control parameter generated according to the preference of the user is changed according to the physical condition of the user.
(c) A method in which output ratios of the basic control parameter are generated according to the preferences of different users, and the output ratios are changed according to the respective users.
(d) A method in which output ratios of the basic control parameter are generated according to the skill of different users, and the output ratios are changed according to the respective users.
(e) A method in which output ratios of the basic control parameter are generated according to use conditions, and the output ratios are changed according to the use conditions.
(f) A method in which output ratios of the basic control parameter are generated according to the physical conditions of the user, and the output ratios are changed according to the physical condition of the user.

In case the above method (a) is to be applied, the characteristic generating section generates a basic control parameter using the preference of the user as an evaluation standard and also sets information representing the use condition of a control object as characteristic information. The automatic characteristic changing means uses information that can be related to the information representing the use condition of the control object as input information, and both pieces of information are related to each other. In concrete terms, in case the control object is a motorcycle and the information representing the use condition is the running condition (such as a high speed run), the automatic characteristic changing means can use, as input information that can be related to the running characteristic, the vehicle speed and throttle opening changing rate, and both pieces of information are related to each other by the use of a fuzzy rule, a function, or a map.

In case the above method (b) is to be applied, the characteristic generating section generates a basic control parameter using the preference of the user as an evaluation standard and also sets, in addition to the use condition of the control object, information representing the physical condition of the user as characteristic information (such as "acceleration characteristic: low/body temperature ... degrees/pulse rate ...," etc.). The automatic characteristic changing means, using information as input information that can be related to the information representing the use condition of the control object and to the information representing the physical condition of the user, and relates both pieces of information to each other. Incidentally, the information representing the physical condition of the user is not limited to body temperature and pulse rate mentioned above but may include various types of information such as the amount of perspiration, etc.
These pieces of information representing the physical condition are detected with various sensors, and the detected values can be used as input information to the characteristic generating section and the automatic characteristic changing means.

In case the above method (c) is to be applied, the characteristic generating section generates a basic control parameter using the preference of the user as an evaluation standard and also sets, in addition to the use condition of the control object,information representing the identity of the user as characteristic information (such as "running characteristic: low acceleration/Yamaha Taro," etc.). The automatic characteristic changing means, using information as input information that can be related to the information representing the use condition of the control object and to the information representing the identity of the user, and relates both pieces of information to each other in concrete terms, it may be constituted that the user identity is judged from the operation pattern of the user or that a characteristic measure (such as the fingerprint, iris pattern, etc.) of the user is detected with a sensor to identify the user from the detected value, or that the user is identified from an identification code inputted directly by the user.

In case the above method (d) is to be applied, the characteristic generating section generates a basic control parameter assuming the skill of the user as an evaluation standard and also sets, in addition to the use condition of the control object, information representing the identity of the user as characteristic information (such as "running characteristic: low acceleration/Yamaha Taro," etc.). The automatic characteristic changing means, assuming information that can be related to the information representing the use condition of the control object and to the information representing the identity of the user as input information, and relates both pieces information to each other.

In case the above method (e) is to be applied, the characteristic generating section generates a basic control parameter using the use condition of the control object as an evaluation standard and also sets the information representing the use condition of the control subject as the characteristic information, and defines relationship between the two.

In case the above method (f) is to be applied, the characteristic generating section generates a basic control parameter using the physical condition of the user as an evaluation standard and also sets, in addition to the use condition of the control object, the information representing the physical condition of the user as the characteristic information (such as "acceleration characteristic/body temperature ... degrees/pulse rate ...," etc.). The automatic characteristic changing means uses information that can be related to the information representing the use condition of the control subject and to the information representing the physical condition of the user as input information, and defines relationship between the two pieces of information.

Incidentally, the above-described control device may be provided with a means for displaying the output ratio of the basic control parameter that is being used. This makes it possible for the user to intuitively understand changes in the characteristic.

The above-described constitution is an example in which the characteristic control device is incorporated in the control device having the basic control module. However, another constitution is also possible in which the characteristic control device is constituted separately from the control device having the basic control module.

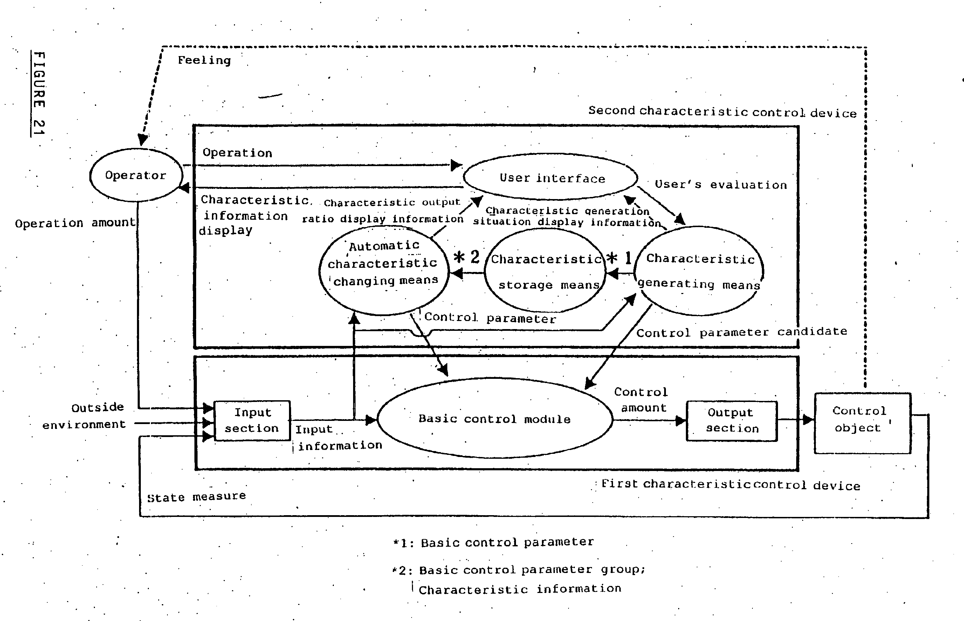

FIG. 21 is a general block diagram of a constitution in which a control device having a basic control module is used as a first control device incorporated in the control object, and a characteristic control device is used as a second control device, with both control devices constituted separately from each other.

As shown in the figure, the first control device has a basic control module that calculates the control amount of the control object on the basis of input information (amount of manipulation by the user, information obtained from outside environment, state measure of the control object obtained from the control object) supplied through an input section, and that controls the control object through an output section.

The second control device comprises;
a characteristic generating means for generating basic control parameters (basic characteristics) of the basic control module according to specified evaluation standard, a characteristic storage means for storing the basic control parameters generated with the characteristic generating means, and
an automatic characteristic changing means for automatically determining output ratios of plural basic control parameters stored in the characteristic storage means according to specified input information, and for calculating and outputting control parameters to be applied to the basic control module on the basis of the determined output ratios.

Since the processing means provided in the first and second control devices are the same as those provided in the first embodiment described above, detailed description of them is omitted.

The second control device, like in the first embodiment, may be provided with a user interface as required. The user interface includes as required; a display means for displaying the situation of generating characteristics in the characteristic generating means, an input means for a user directly inputting evaluations in the characteristic generating means, and/or a displaying means for displaying output ratios of characteristics in the automatic characteristic changing means.

In most cases, the control device having the basic control module is installed in products, the control objects. Therefore, when the characteristic control device is separately provided as described above, it is possible to perform complicated calculation process on the characteristic control device side. This makes it possible to simplify the control device installed in the control object, which in turn reduces the cost of the product itself.

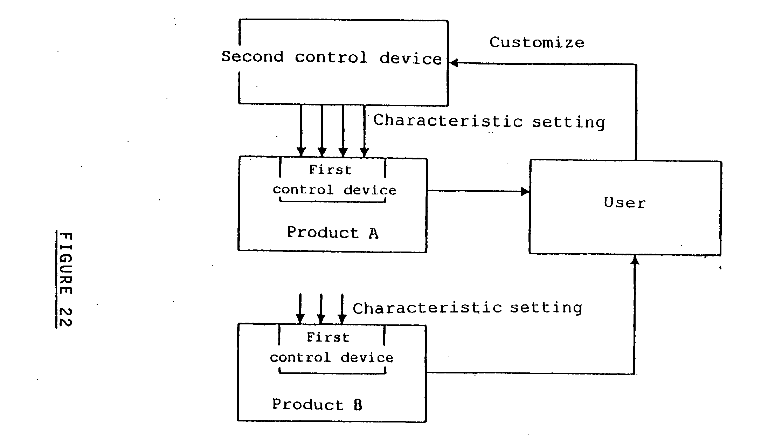

When a user owns plural products as shown in FIG. 22, a product is used while other products are not used. For example, in case the user owns two motorcycles, or a motorcycle and a car, one is used while the other is not used. In such a case, when the characteristic control device is constituted as a separate item, it is possible to customize or control the characteristics of plural control objects with a single characteristic control device. Therefore, it is possible to save the number of the characteristic control devices because only one characteristic control device suffices for the purposes of plural control objects.

The separate constitution of the characteristic control device also eliminates restrictions in manufacture and makes it possible to use a general purpose computer as a characteristic control device.

The possibility of using a general purpose computer as the characteristic control device as described above makes it unnecessary for the user to learn operation processes for every product, makes it possible to customize and control the characteristics of various products through simplified processes with the familiar computer. It is also possible to change only the product (the control object) or the characteristic control device. This is very effective for different products of different life cycles such as an engine-operated vehicle and a computer.

When the characteristic control device is constituted separately, it maybe constituted to be attachable to and removable from the control device having a basic control module, and to be operable irrespective of being attached to or removed from the control device. In that case, it is also possible to use a wireless interface between the characteristic control device and the control device to simplify the removal and attachment of the characteristic control device.

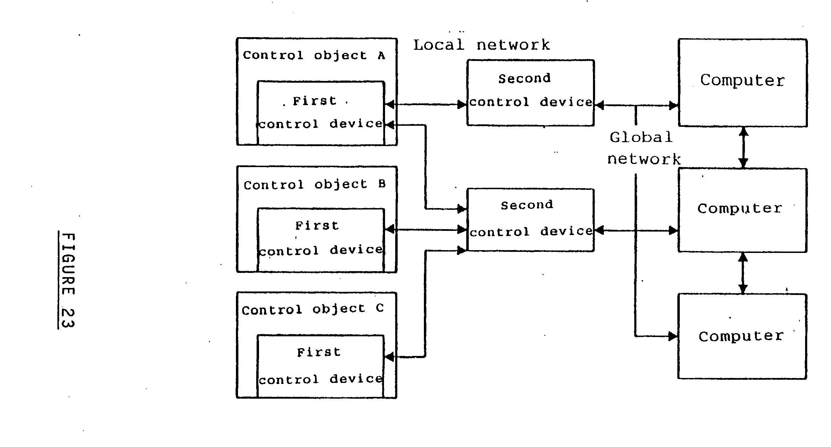

In that case, it is also possible for the characteristic control device as a single unit to generate and change the characteristic of the basic control module and also, as shown in FIG. 23, to communicate with other computers through a network. In this way, it is possible to receive and send out various characteristic information, and obtain information on use conditions such as positioning and weather conditions through the network.

In case a separate computer is used as a characteristic control device and a computer is connected to a network as described above, it is possible for the computer as the characteristic control device to play the role of a firewall. This makes it possible to constitute a system of high performance and reliability as a whole with a global network capable of gaining access over a wide range to receive and send out versatile data, and with a local network capable of receiving and sending out only the information required for control with a high level of security. This has another advantage that even in case connection to a global network is impossible due to geographical environment, the characteristic of the basic control module can be changed with the local network only.

Incidentally, the above global network may be constituted with the Internet. Also, if the control object has an interface capable of directly connecting to the Internet, the local network may also be constituted utilizing the Internet.

In case the characteristic control device is constituted separately from the control device having the basic control module, it is necessary to provide fail-safe function on the basic control module side to compensate for communication errors and to protect the basic control module side in case the calculated values of the characteristic control device exceed the permissible limit of the control object.

Moreover, when a characteristic is changed with the characteristic changing means, a display means may be provided to convert the measure of the characteristic into an image to use it as a yardstick for evaluating the characteristic.

The above explanation of the characteristic control device of this embodiment is made by way of a general example without referring to a specific control object. In the following, however, a more specific example will be explained in which the characteristic control device is the running characteristic control device of a specific control object, a motorcycle.

An electronic throttle device has a throttle valve for controlling the intake air rate of an engine. The throttle valve of the electronic throttle device is driven according to the accelerator operation amount, the input amount given by a rider. The characteristic of vehicle drive feeling is changed by controlling the characteristic of the electronic throttle device.

There are two characteristics that can be changed with the electronic throttle device: static characteristic and dynamic characteristic.

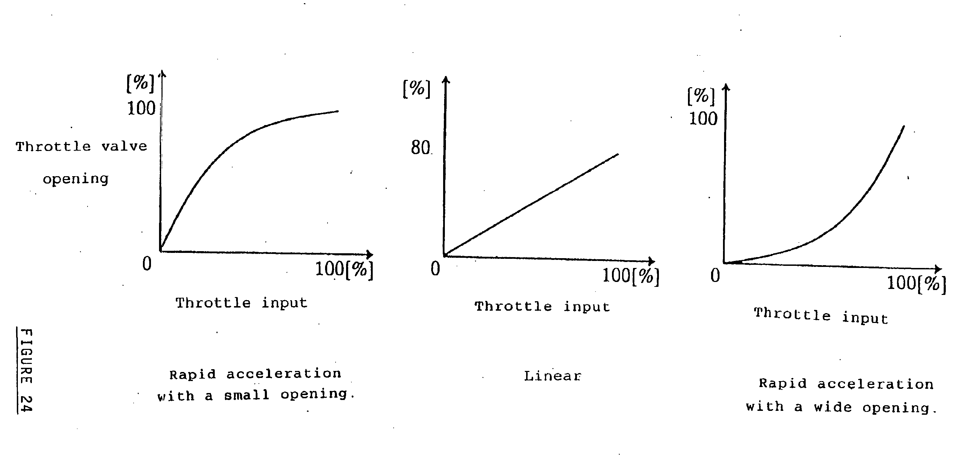

The static characteristic is the throttle valve opening when the throttle device input is constant and affects the stationary running characteristic of a vehicle. A few typical static characteristics are shown in FIG. 24. The static characteristic may be represented with any function if the throttle valve opening or output is zero when the throttle device input is zero. Changing the static characteristic of the throttle valve opening makes it possible to realize different throttle openings with the same throttle device input.

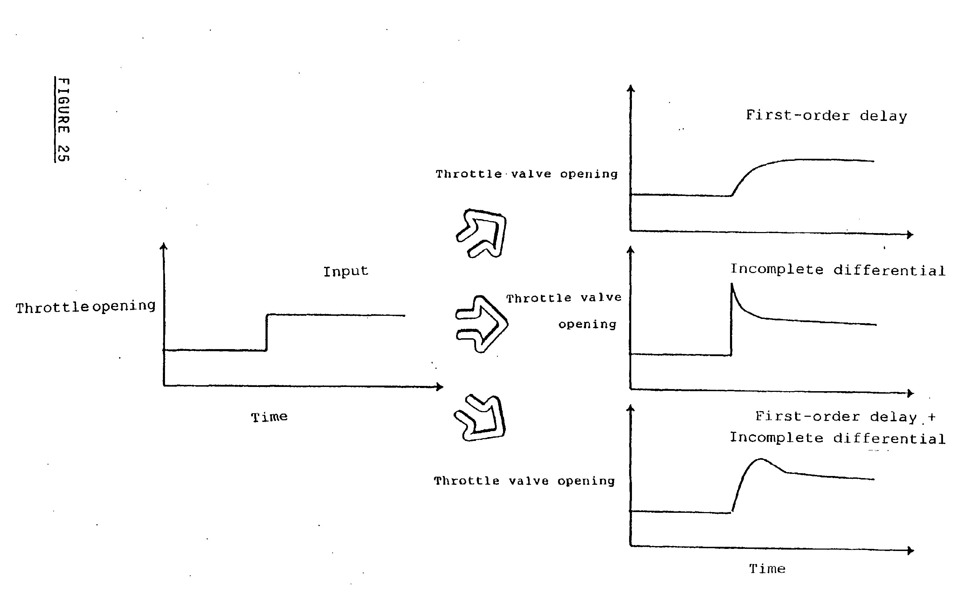

The dynamic characteristic is the relation between the change in the throttle device input and the change in the throttle valve opening, and affects the transient characteristic of the vehicle. Concretely, a first-order delay filter is combined with an incomplete differential filter and their parameters are changed. FIG. 25 shows the relation between the throttle device input and the throttle valve opening when the dynamic characteristic is changed.

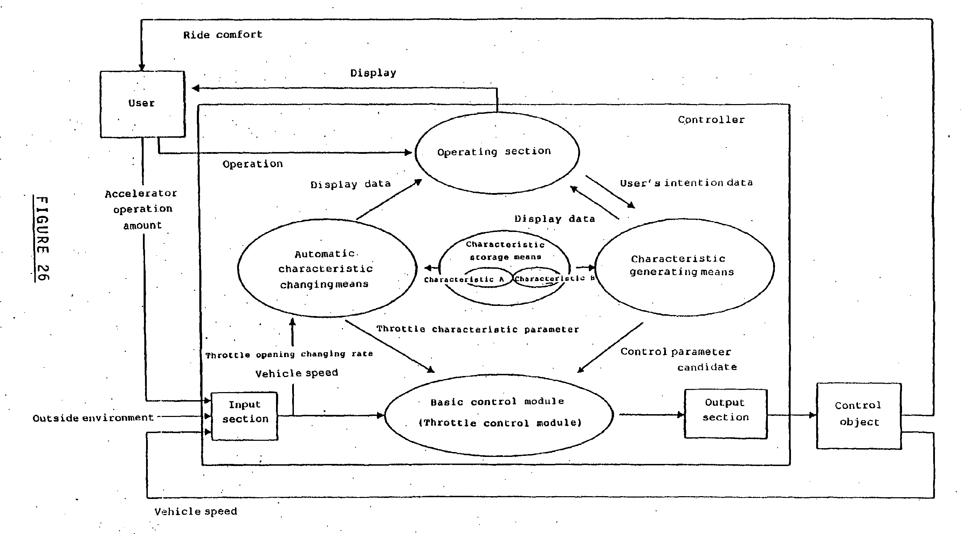

FIG. 26 is a general block diagram of a running characteristic control device of a motorcycle to which a characteristic control device is applied. As shown, the running characteristic control device comprises a throttle control module for determining the control output for the throttle valve by the use of a throttle characteristic parameter, a characteristic generating means for controlling the throttle characteristic parameter, a characteristic storage means, and an automatic characteristic changing means.

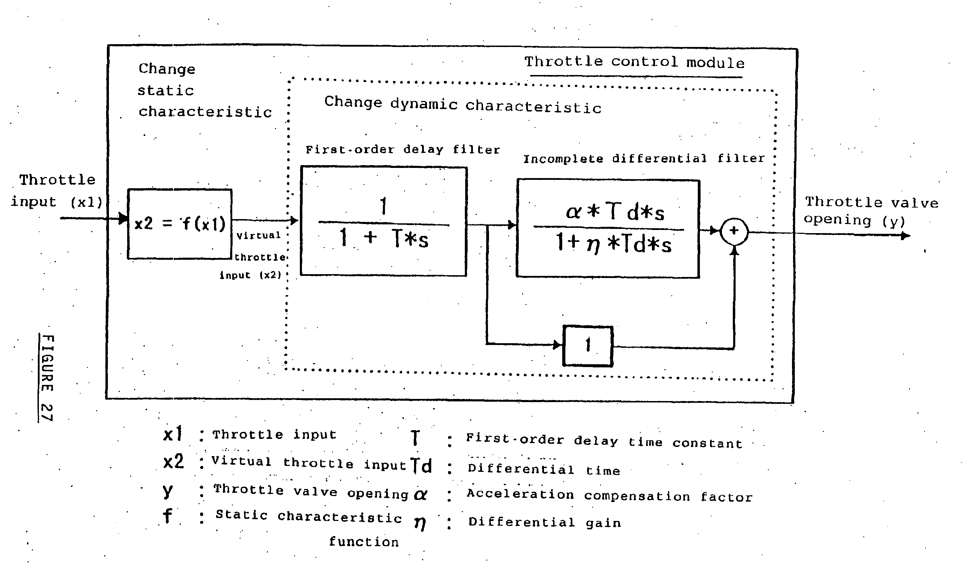

The throttle control module determines the throttle valve opening from the throttle input on the basis of the throttle characteristic parameter. This module simultaneously changes the static and dynamic characteristics. FIG. 27 is a block diagram of the throttle control module. As shown, this throttle control module has a static characteristic changing section and a dynamic characteristic changing section. The static characteristic changing section converts a throttle input to a virtual throttle input. The dynamic characteristic changing section determines a throttle valve opening from the virtual throttle input. The characteristic parameters used in this embodiment are; the small opening static characteristic, the wide opening static characteristic, the first-order delay time constant, and the differential gain.

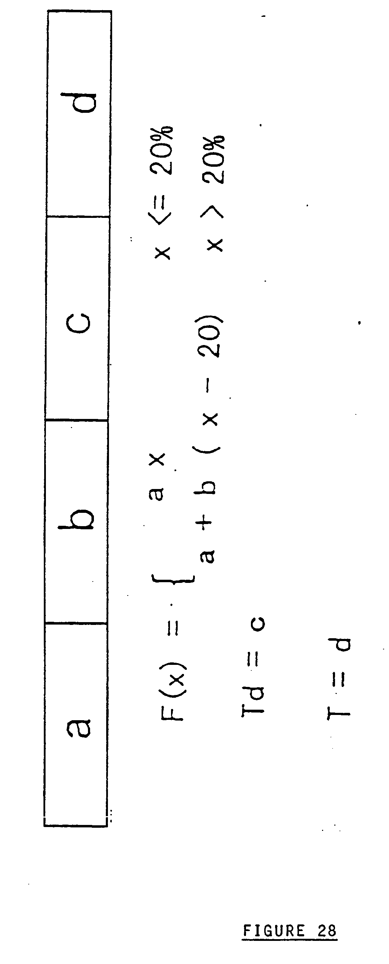

The characteristic generating means, as explained with FIG. 18, comprises an evaluating section, a condition judging section, and an evolution calculating section, and automatically generates a basic throttle characteristic parameter for determining the running characteristic. As an example, FIG. 28 shows a method of coding genes in case the hereditary algorithm is used in the evolutionary calculating section. In the figure, a and b are parameters related to the static characteristic function f(x), c is a differential time Td related to the dynamic characteristic, and d is a first-order delay time constant T related to the dynamic characteristic. In case the hereditary algorithm is used in the evolutionary calculating section, one generation is formed with plural genes (namely control parameter candidates) coded as shown. At the same time, the characteristic information determined in the condition judging section is given to respective genes. The genes are actually applied to the throttle characteristic parameters and trial runs are performed. On the basis of the results of the trial runs, each gene is evaluated. Until the value of the evaluation reaches a specified standard, generation alternation is repeated by operations such as selection, crossing, and mutation.

In this embodiment, the characteristic information relates to "running characteristic." Each piece of information is provided with pieces of information related to the running characteristic such as; "running characteristic: high speed running characteristic," running characteristic: low speed running characteristic," "running characteristic: winding running characteristic," "running characteristic: acceleration running characteristic," etc.

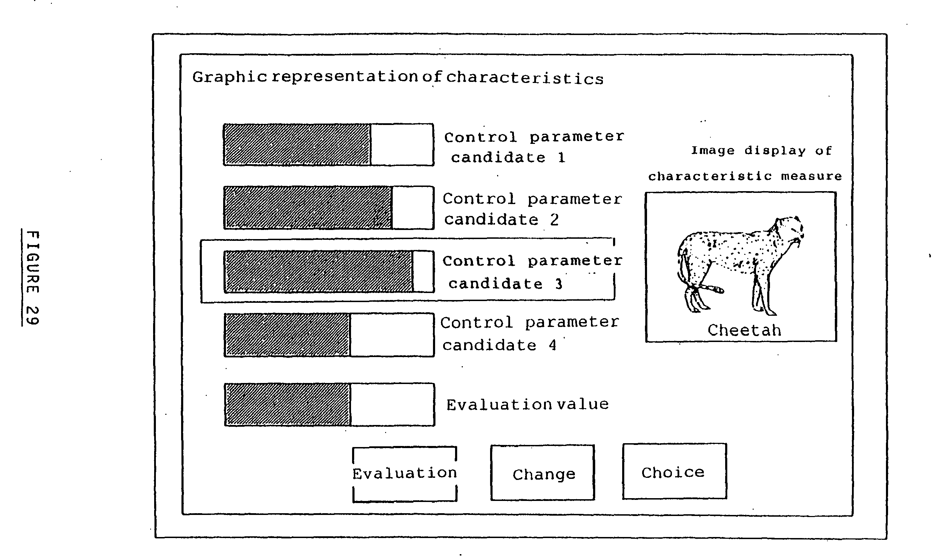

Each gene is evaluated in the evaluating section. As methods of calculating the evaluation values, there are two: one in which the evaluation by the user of the characteristic is inputted by the user using a user interface, and the other in which the evaluation values are automatically calculated from the operation history of the user using a function prepared in advance. In case the evaluation values by the user are inputted by the user using the user interface, an operating section that can be operated by the user is added as shown in FIG. 26. Information inputted through the operating section is inputted to the evaluating section. In this case, the user can obtain information on the characteristic from the display on the operating section or from the physical feeling, and can enter the evaluation value through the operating section. FIG. 29 shows an example of operation panel of the operating section. In this way, the operation panel can use both graphic display of parameters representing the compatibility (characteristic amount) of each gene (control parameter candidate) with the characteristic information and the image display of the characteristic measure. In concrete terms, for example, if the characteristic information of this generation is "running characteristic: acceleration characteristic," the greater the value in the graphic display, the higher the acceleration characteristic of the gene. In contrast, the smaller the value in the graphic display, the lower the acceleration characteristic of the gene. The image display corresponds to the characteristic measure of the gene chosen. In concrete terms, if the characteristic information is "running characteristic: acceleration characteristic" and a gene of high acceleration characteristic is chosen, an image of a nimble animal such as a cheetah is displayed. When a gene of low acceleration characteristic is chosen, an image of a slow animal such as an elephant is displayed. In this way, since the gene chosen is replaced with the image and displayed, the user can understand intuitively the characteristic of the gene and is helped in making evaluations.

The "changing button" shown in the figure is used to change the gene to be evaluated. The "choice button" is used to choose the gene to be evaluated. The "evaluation button" is used to enter the evaluation of the gene chosen. In concrete terms, entering the evaluation is done for example by relating the value to the number of times or the duration of pressing the evaluation button. In case the evaluation value is to be automatically calculated, for example, the smoothness of the throttle operation is calculated from the rate of change in the throttle, and the calculated value can be used as the evaluation value.

When an evaluation value meeting a specified standard is obtained, the gene (namely the control parameter candidate) is mapped as the basic characteristic parameter together with the characteristic information in the characteristic storage means.

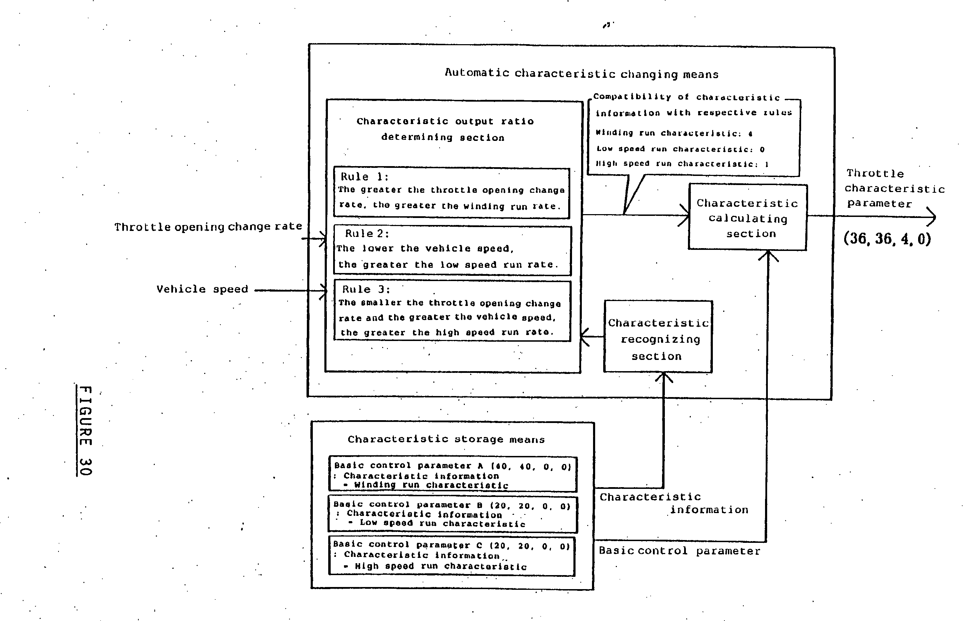

Next, the automatic characteristic changing means will be described. FIG. 30 shows a block diagram of the automatic characteristic changing means. As shown, the automatic characteristic changing means comprises; a characteristic recognizing section, a characteristic output ratio determining section, and a characteristic calculating section.

The characteristic output ratio determining section has a fuzzy rule constituted to be capable of relating the input information to the characteristic information of each basic control module and determining from the input information the output ratio of each basic control parameter.

In concrete terms, for example, it is assumed that the following are stored in the characteristic storage means:
Basic control parameter A: characteristic information (running characteristic: winding run characteristic).
Basic control parameter B: characteristic information (running characteristic: low speed run characteristic).
Basic control parameter C: characteristic information (running characteristic: high speed run characteristic).

Using the throttle change rate and the vehicle speed as the input information to the characteristic output ratio determining section, the fuzzy rules in the characteristic output ratio determining section can be created as follows:
- Rule 1:: "the greater the throttle change rate, the greater the winding run rate."
- Rule 2:: "lower the speed, the greater the low speed run rate."
- Rule 3:: "the smaller the throttle change rate and higher the speed, the greater the high speed run rate."

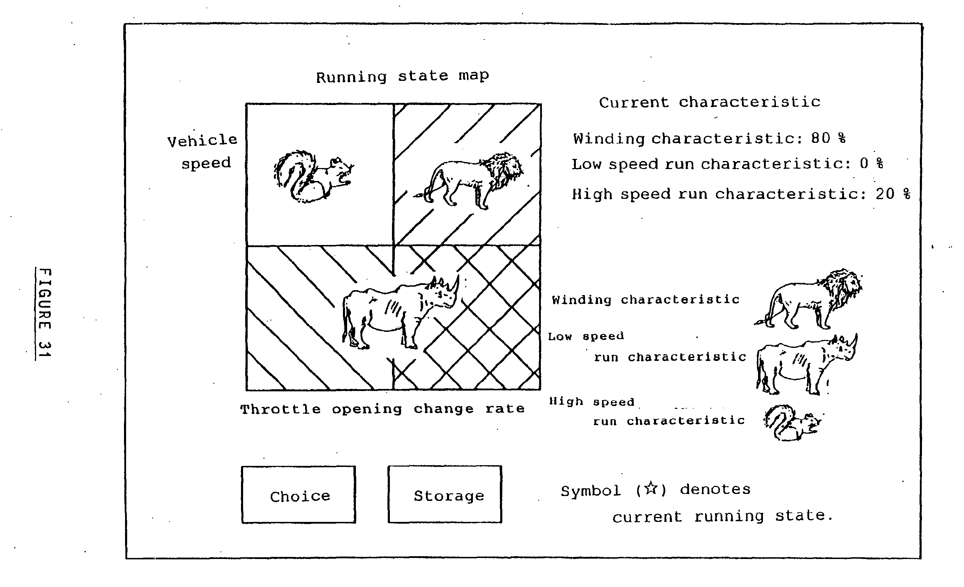

These rules can be displayed on a map as shown in FIG. 31. In the figure, the symbol of the "lion" corresponds to the characteristic information of the basic control parameter A. The symbol of the "squirrel" corresponds to the characteristic
information of the basic control parameter B. The symbol of the "rhinoceros" corresponds to the characteristic information of the basic control parameter C. The value of the border line defining the regions of symbols can be used to determine whether the value of input information is "great" or "small" in the if-portion of the fuzzy rule. The symbol ( 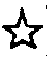 ) indicates the current position of characteristic obtained from the input information. Indicating the relation between the fuzzy rule and the current characteristic with the map enables the user to know the position of the current characteristic visually or intuitively.

As the basic control parameters are generated in succession in the characteristic generating section, the number of pieces of characteristic information increases accordingly. Therefore, the characteristic output ratio determining section creates or deletes rules or changes the then-portion of rules so as to adapt to the new characteristic information by recognizing the new characteristic information in the characteristic recognizing section every time a new basic control parameter is generated in the characteristic generating section.

The characteristic output ratio determining section uses the above-described fuzzy rules to obtain the compatibility of the current characteristic with each piece of characteristic information and outputs it to the characteristic calculating section.

The characteristic calculating section calculates the values of respective basic control parameters A, B, and C from the map of the characteristic storage means on the basis of the information on the state measure contained in the input information, calculates the compatibility weighted average of the basic control parameter values using the values of compatibility with respective pieces of characteristic information inputted from the characteristic output ratio determining section, and outputs the calculated value as the throttle characteristic parameter to be applied to the basic control module.

In concrete terms, as shown in FIG. 30 for example, if the values of the basic control parameter A (winding run characteristic) stored in the characteristic storage means are (40, 40, 0, 0), the values of the basic control parameter B (low speed run characteristic) are (20, 20, 0, 0), and the values of the basic control parameter C (high speed run characteristic) are (20, 20, 0, 0), the values of compatibility with the respective rules of the information obtained from the characteristic output ratio determining section are 4 for the winding run characteristic, 0 for the low speed run characteristic, and 1 for the high speed run characteristic, then the values of the throttle characteristic parameter outputted from the characteristic calculating section become (36, 36, 4, 0)

The above embodiment relates to changing the characteristic of the electronic throttle device of the motorcycle. However, the object characteristic of the motorcycle to be changed is not limited to that in the above embodiment but may be fuel injection characteristic, gas pedal-off deceleration characteristic, or exhaust noise characteristic, etc. As to the control object, it is not limited to the motorcycle but any other control object may be chosen for changing characteristics according to preference, skill, use condition, etc. of the user, as a matter of course.

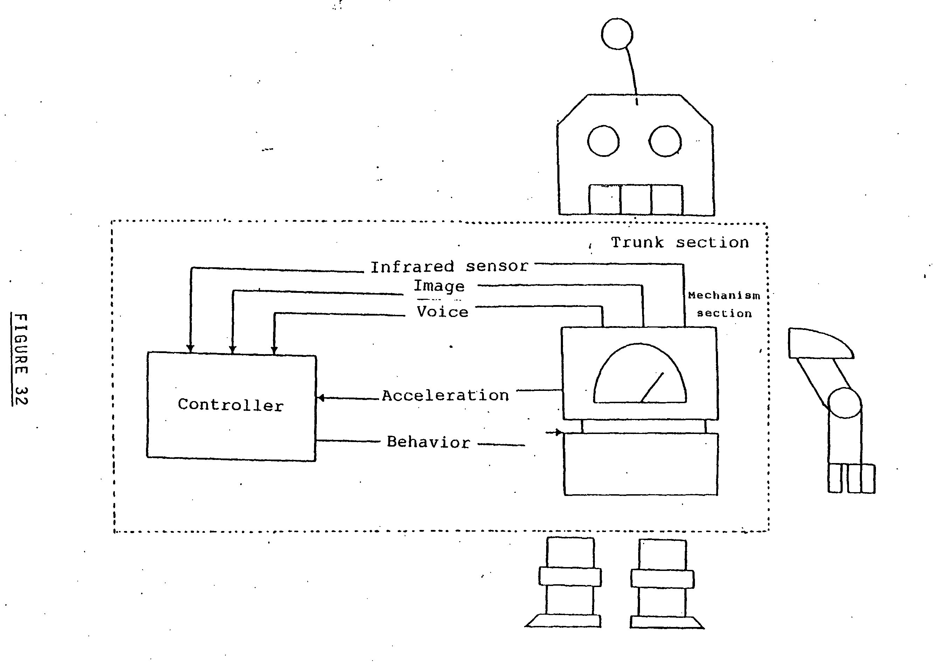

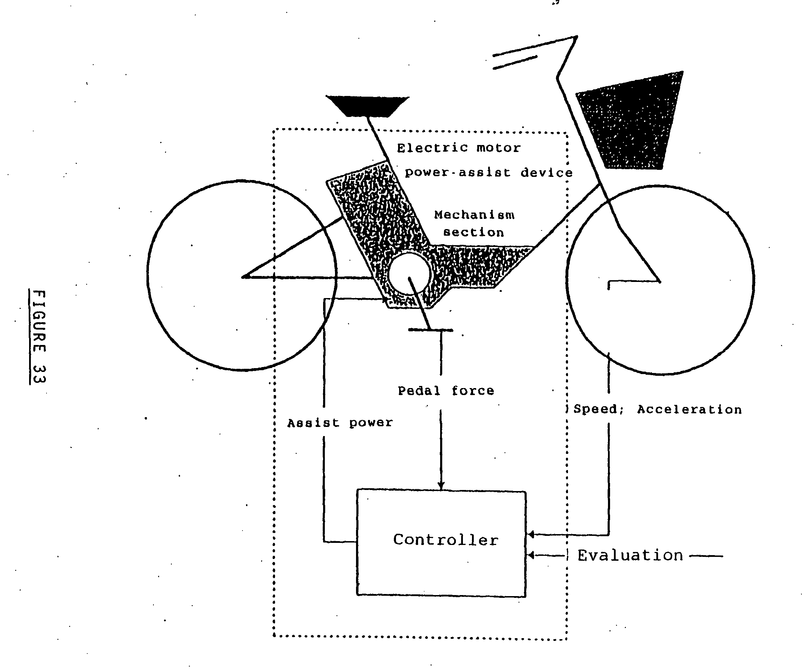

In concrete terms, the control object may be a robot as shown in FIG. 32 to automatically change interactive speech and behavior of the robot according to the user's preference or the environment in which the robot is used. Or, the control object may be an electric motor-assisted bicycle as shown in FIG. 33 to cause an assist ratio to be outputted constantly matching the change in the use environment, user's age and physical size, travel distance, etc. Or, the control object may be an electric motor power-assisted wheelchair, or an electric motor-operated vehicle.

As described above, the characteristic control device of a control object related to an embodiment for controlling characteristics of a control parameter comprises; a basic control module for determining a control amount for controlling the output of the control object on the basis of specified input information and the control parameter for relating the input information to an output given relative to the input information to the control object. The characteristic control device further comprises; a characteristic generating means for performing a specified evaluation on the basis of the input information to generate a basic control parameter to be the basis of the control parameter, a characteristic storage means for storing the basic control parameter, and an automatic characteristic changing means for determining according to a specified condition and automatically changing the control parameter to be applied to the basic control module according to the basic control parameter stored in the characteristic storage means and according to the input information.

Therefore, an effect is provided that the characteristic of the control object can be made to match flexibly and finely the use conditions of the control object such as the user's skill and preference and the use environment.

The characteristic generating means generates the basic control parameter using an evolutionary calculating method. The characteristic generating means has an evaluating section having an evaluating function for evaluating the basic control parameter on the basis of the input information. The automatic characteristic changing means changes the ratio of the basic control parameter using the fuzzy rule and makes it possible to automatically change the control parameter applied to the basic control module.

The characteristic control device of a control object related to an embodiment for controlling characteristics of a control parameter comprises; a basic control module for determining a control amount for controlling the output of the control object on the basis of specified input information and the control parameter for relating the input information to an output given relative to the input information to the control object, and further comprises; a characteristic generating means for generating a basic control parameter to be the basis of the basic control parameter according to a specified evaluation standard, a characteristic storage means for storing the basic control parameter, an automatic characteristic changing means for determining according to a specified condition and automatically changing the control parameter to be applied to the basic control module according to the basic control parameter stored in the characteristic storage means and according to the input information, and a user interface means with which a user can directly manipulate the basic control parameter generated with the characteristic generating means.

Therefore, it is possible to make the characteristic of the control object finely match the use condition dependent on the user's preference and skill. At the same time, it is possible to provide the user with the pleasure of participating in the generation of the characteristics of the control object.

The characteristic generating means evaluates the basic control parameter on the basis of the manipulation information from the user interface and also generates the basic control parameter using the evolutionary calculating method on the basis of the evaluation result. The automatic characteristic changing means changes the ratio of the basic control parameter using fuzzy rules and makes it possible to automatically change the control parameter applied to the basic control module. The user interface means has a display means for displaying at least either characteristic information representing the characteristic of the basic control parameter evaluated and generated with the characteristic generating means, or the ratio of the basic control parameter changed with the fuzzy rules provided in the automatic characteristic changing means.

The characteristic control device of a control object related to an embodiment for controlling characteristics of the control parameter comprises; a basic control module for determining a control amount for controlling the output of the control object on the basis of specified input information and a control parameter for relating the input information to an output given to the control object, and also comprises;
a characteristic generating means for generating a basic
control parameter to be the basis of the basic control parameter according to a specified evaluation standard,
a characteristic storage means for storing the basic control parameter, and
an automatic characteristic changing means for determining according to a specified condition and automatically changing the control parameter to be applied to the basic control module according to the basic control parameter stored in the characteristic storage means and according to the input information.

Said characteristic control device further comprises a user interface means with which a user can directly manipulate the basic control parameter generated with the characteristic generating means. The characteristic generating means evaluates the basic control parameter on the basis of the manipulation information from the user interface means and also generates the basic control parameter using an evolutionary calculating method on the basis of the evaluation result. The user interface means has a display means for displaying at least either characteristic information representing the characteristic of the basic control parameter evaluated and generated with the characteristic generating means, or the ratio of the basic control parameter changed with the fuzzy rules provided in the automatic characteristic changing means. The characteristic control device is removably attached to the control device for controlling the output of the control object. The characteristic control device is constituted with a general purpose computer. The characteristic control device has a communication means that enables exchange of information between the characteristic control device and the control device.

Therefore, various remarkable effects are provided. For the user, the range of choosing a product becomes wider: whether or not the user needs the characteristic control device can be chosen at the time of purchasing the product, or the characteristic control device can be retrofitted. Since the characteristic control device can be attached or removed at will, the user can customize the characteristic at any place. It is also possible to change characteristics of plural control objects of a single type or plural types of control objects. It is also possible to simply replace only the control object or the characteristic control device. Constituting the characteristic control device and the control device of the control object separately reduces restriction on designing the characteristic control means and so the characteristic control means may be constituted with a general purpose computer. In this way, an effect is provided that the user can use an interface, standard equipment of general purpose computers, for example the Internet. Another effect is that the user can use the computer which is already in hand and the user is familiar with, to customize the characteristic of the control object by simply purchasing and attaching an inexpensive interface.

Regarding the first and second basic embodiment the characteristic control device for controlling characteristics of control parameter for a control object, said characteristic control device comprises: a basic control module for determining a control amount output for controlling the control object in accordance with at least one specified input information and said control parameter, and an automatic characteristic changing means for determining said control parameter being applied to the basic control module in accordance with a basic control parameter and said input information.

Said automatic characteristic changing means is provided for determining said control parameter being applied to the basic control module in accordance with a basic control parameter, said input information and a specified condition. Said automatic characteristic changing means is provided for determining said specified condition in accordance with a relation of said specified input information with characteristic information associated to the basic control parameter.

Said automatic characteristic changing means is provided for changing the control parameter provided in the basic control module. The automatic characteristic changing means is provided for changing ratios of the basic control parameters using fuzzy rules for determining the control parameters applied to the basic control module.

According to the embodiments, a user interface means is provided for changing the fuzzy rules in the automatic characteristic changing means. Said user interface means comprises a display device for displaying the basic control parameters changed with the fuzzy rules in the characteristic changing means.

According to the embodiments, a characteristic storage means is provided for storing at least one basic control parameter.

At least said basic control module is provided in a first device and at least said an automatic characteristic changing means is provided in a second device, wherein said first and second device are connectable for data transfer.

According to embodiment, a characteristic generating means is provided for performing a specified evaluation on the basis of the input information to generate the basic control parameter. The characteristic generating means is provided for generating the basic control parameter in accordance with an evolutionary calculating method, especially an evaluating function for evaluating the basic control parameter on the basis of the input information. A user interface means is provided for manipulating the basic control parameter generated with the characteristic generating means, especially for evaluating the basic control parameter on the basis of the manipulation information from the user interface and for generating the basic control parameter in accordance with the evolutionary calculating method on the basis of an evaluation result. The user interface means has a display means for displaying at least either characteristic information representing a characteristic of the basic control parameter evaluated and generated with the characteristic generating means, or the ratio of the basic control parameter changed with fuzzy rules provided in the automatic characteristic changing means.

The first and second basic embodiments also relates to a method for controlling characteristics of control parameter for a control object comprising:
- determining a control amount output for controlling the control object in accordance with of at least one specified input information and said control parameter, and
- determining said control parameter in accordance with a basic control parameter and said input information.

Said method further comprises: determining said control parameter in accordance with a basic control parameter, said input information and a specified condition.

Said method further comprises: determining said specified condition in accordance with a relation of said specified input information with characteristic information associated to the basic control parameter.

Said method further comprises: changing ratios of the basic control parameters using fuzzy rules for determining the control parameters, especially changing the fuzzy rules in accordance with an users intention.

Said method further comprises: performing a specified evaluation on the basis of the input information to generate the basic control parameter in accordance with an evolutionary calculating method, especially an evaluating function for evaluating the basic control parameter on the basis of the input information.

Said method further comprises: evaluating the basic control parameter on the basis of a manipulation information from a user and generating the basic control parameter in accordance with the evolutionary calculating method on the basis of an evaluation result.

## Claims

1. A characteristic control device for controlling a controlled object comprising:
a basic control module for determining a control output amount for controlling the controlled object in accordance with at least one specified input information and a control parameter, and
an automatic characteristic changing means for obtaining said control parameter being applied to the basic control module as a weighted combination of a plurality of basic control parameters in accordance with said specified input information.

2. A characteristic control device according to claim 1, **characterized in that** said automatic characteristic changing means is provided for determining said control parameter being applied to the basic control module in accordance with said basic control parameters, said input information and a specified condition.

3. A characteristic control device according to claim 2, **characterized in that** said automatic characteristic changing means is provided for determining said specified condition in accordance with a relation of said specified input information with characteristic information associated to the basic control parameter.

4. A characteristic control device according to at least one of the claims 1 to 3, **characterized in that** said automatic characteristic changing means is provided for changing the control parameter provided in the basic control module.

5. A characteristic control device according to at least one of the claims 1 to 4, **characterized in that** the automatic characteristic changing means is provided for changing combination ratios of the basic control parameters using fuzzy rules for determining the control parameters applied to the basic control module.

6. A characteristic control device according to claim 5, **characterized by** a user interface means for changing the fuzzy rules in the automatic characteristic changing means.

7. A characteristic control device according to claim 5 or 6, **characterized in that** said user interface means comprises a display device for displaying the basic control parameters changed with the fuzzy rules in the characteristic changing means.

8. A characteristic control device according to at least one of the claims 1 to 7, **characterized by** a characteristic storage means for storing at least one basic control parameter.

9. A characteristic control device according to at least one of the claims 1 to 8, **characterized in that** at least said basic control module is provided in a first device and at least said an automatic characteristic changing means is provided in a second device, wherein said first and second device are connectable for data transfer.

10. A characteristic control device according to at least one of the claims 1 to 9, **characterized by** a characteristic generating means for performing a specified evaluation on the basis of the input information to generate the basic control parameter.

11. A characteristic control device according to claim 10, **characterized in that** the characteristic generating means is provided for generating the basic control parameter in accordance with an evolutionary calculating method, especially an evaluating function for evaluating the basic control parameter on the basis of the input information.

12. A characteristic control device according to claim 10 or 11, **characterized by** a user interface means for manipulating the basic control parameter generated with the characteristic generating means, especially for evaluating the basic control parameter on the basis of the manipulation information from the user interface and for generating the basic control parameter in accordance with the evolutionary calculating method on the basis of an evaluation result.

13. A characteristic control device according to claim 12, **characterized in that** the user interface means has a display means for displaying at least either characteristic information representing a characteristic of the basic control parameter evaluated and generated with the characteristic generating means, or the ratio of the basic control parameter changed with fuzzy rules provided in the automatic characteristic changing means.

14. Method for controlling a controlled object comprising:
- determining a control output amount for controlling the controlled object in accordance with at least one specified input information and a control parameter, and
- obtaining said control parameter being applied to the basic control module as a weighted combination of a plurality of basic control parameters in accordance with said specified input information.

15. Method for controlling characteristics of control parameter according to claim 14, **characterized by** determining said control parameter in accordance with said basic control parameters, said input information and a specified condition.

16. Method for controlling characteristics of control parameter according to claim 14, **characterized by** determining said specified condition in accordance with a relation of said specified input information with characteristic information associated to the basic control parameter.

17. Method for controlling characteristics of control parameter according to 14 or 16, **characterized by** changing combination ratios of the basic control parameters using fuzzy rules for determining the control parameters, especially changing the fuzzy rules in accordance with an users intention.

18. Method for controlling characteristics of control parameter according to at least one of the claims 14 to 17, **characterized by** performing a specified evaluation on the basis of the input information to generate the basic control parameter in accordance with an evolutionary calculating method, especially an evaluating function for evaluating the basic control parameter on the basis of the input information.

19. Method for controlling characteristics of control parameter according to claim 18, **characterized by** evaluating the basic control parameter on the basis of a manipulation information from a user and generating the basic control parameter in accordance with the evolutionary calculating method on the basis of an evaluation result.

## Patentansprüche

1. Kennlinien- Steuerungsvorrichtung zum Steuern eines gesteuerten Objektes, aufweisend:
ein Basis- Steuerungsmodul zum Bestimmen einer Steuerungsausgangsgröße zum Steuern des gesteuerten Objektes in Übereinstimmung mit zumindest einer spezifizierten Eingangsinformation und einem Steuerungsparameter, und
einer automatischen Kennlinien- Veränderungseinrichtung zum Erhalten des Steuerungsparameters, der an dieses Basis- Steuerungsmodul als eine gewichtete Kombination einer Mehrzahl von Basis- Steuerungsparametem in Übereinstimmung mit der spezifizierten Eingangsinformation angewandt wird.

2. Kennlinien- Steuerungsvorrichtung nach Anspruch 1, **dadurch gekennzeichnet, dass** die automatische Kennlinien- Veränderungseinrichtung vorgesehen ist zum Bestimmen des Steuerungsparameters, der an das Basis- Steuerungsmodul in Übereinstimmung mit den Basissteuerungsparametern, der Eingangsinformation und einer spezifizierten Bedingung gelegt wird.

3. Kennlinien- Steuerungsvorrichtung nach Anspruch 2, **dadurch gekennzeichnet, dass** die automatische Kennlinien- Veränderungseinrichtung vorgesehen ist zum Bestimmen der spezifizierten Bedingung in Übereinstimmung mit einer Beziehung der spezifizierten Eingangsinformation zu der Kennlinieninformation zugehörig zu dem Basis- Steuerungsparameter.

4. Kennlinien- Steuerungsvorrichtung nach zumindest einem der Ansprüche 1 bis 3, **dadurch gekennzeichnet, dass** die automatische Kennlinien- Veränderungseinrichtung vorgesehen ist zum Verändern des Steuerungsparameters, vorgesehen in dem Basis- Steuerungsmodul.

5. Kennlinien- Steuerungsvorrichtung nach zumindest einem der Ansprüche 1 bis 4, **dadurch gekennzeichnet, dass** die automatische Kennlinien- Veränderungseinrichtung vorgesehen ist zum Verändern von Kombinationsverhältnissen der Basis- Steuerungsparameter unter Verwendung von Fuzzy- Regeln zum Bestimmen der an das Basis- Steuerungsmodul gelegten Steuerungsparameter.

6. Kennlinien- Steuerungsvorrichtung nach Anspruch 5, **gekennzeichnet durch** eine Nutzerschnittstelleneinrichtung zum Verändern der Fuzzy- Regeln in der automatischen Kennlinien- Veränderungseinrichtung.

7. Kennlinien- Steuerungsvorrichtung nach Anspruch 5 oder 6, **dadurch gekennzeichnet, dass** die Nutzerschnittstelleneinrichtung eine Anzeigevorrichtung zum Anzeigen der Basis- Steuerungsparameter, verändert mit den Fuzzy- Regeln in der Kennlinien- Veränderungseinrichtung, aufweist.

8. Kennlinien- Steuerungsvorrichtung nach zumindest einem der Ansprüche 1 bis 7, **gekennzeichnet durch** eine Kennlinien- Speichereinrichtung zum Speichern von zumindest einem Basis- Steuerungsparameter.

9. Kennlinien- Steuerungsvorrichtung nach zumindest einem der Ansprüche 1 bis 8, **dadurch gekennzeichnet, dass** zumindest das Basis- Steuerungsmodul in einer ersten Vorrichtung vorgesehen ist und zumindest die automatische Kennlinien-Veränderungseinrichtung in einer zweiten Vorrichtung vorgesehen ist, wobei die erste und zweite Vorrichtung zum Datentransfer verbindbar sind.

10. Kennlinien- Steuerungsvorrichtung nach zumindest einem der Ansprüche 1 bis 9, **gekennzeichnet durch** eine Kennlinien- Erzeugungseinrichtung zum Ausführen einer spezifizierten Bewertung auf der Grundlage der Eingangsinformation, um den Basis- Steuerungsparameter zu erzeugen.

11. Kennlinien- Steuerungsvorrichtung nach Anspruch 10, **dadurch gekennzeichnet, dass** die Kennlinien- Erzeugungsvorrichtung vorgesehen ist zum Erzeugen des Basis- Steuerungsparameters in Übereinstimmung mit einem evolutionären Berechnungsverfahren, insbesondere einer Bewertungsfunktion zum Bewerten des Basis- Steuerungsparameters auf der Grundlage der Eingangsinformation.

12. Kennlinien- Steuerungsvorrichtung nach Anspruch 10 oder 11, **gekennzeichnet durch** eine Nutzerschnittstelleneinrichtung zum Beeinflussen des Basis- Steuerungsparameters, erzeugt mit der Kennlinien- Erzeugungsvorrichtung, insbesondere zum Bewerten des Basis- Steuerungsparameters auf der Grundlage der Beeinflussungsinformation von der Nutzerschnittstelle und zum Erzeugen des Basis-Steuerungsparameters in Übereinstimmung mit dem evolutionären Berechnungsverfahren auf der Grundlage eines Bewertungsergebnisses.

13. Kennlinien- Steuerungsvorrichtung nach Anspruch 12, **dadurch gekennzeichnet, dass** die Nutzerschnittstelleneinrichtung eine Anzeigeeinrichtung zum Anzeigen von zumindest entweder Kennlinieninformation, die eine Kennlinie des Basis-Steuerungsparameters repräsentiert, bewertet und erzeugt mit der Kennlinien-Erzeugungsvorrichtung, oder dem Verhältnis des Basis- Steuerungsparameters hat, verändert mit den Fuzzy- Regeln, vorgesehen in der automatischen Kennlinien- Veränderungseinrichtung.

14. Verfahren zum Steuern eines gesteuerten Objektes, aufweisend:
- Bestimmen einer Steuerungsausgangsgröße zum Steuern des gesteuerten Objektes mit zumindest einer spezifizierten Eingangsinformation und einem Steuerungsparameter, und
- Erhalten des Steuerungsparameters, der an das Basis- Steuerungsmodul als eine gewichtete Kombination einer Mehrzahl von Basis- Steuerungsparametem in Übereinstimmung mit der spezifizierten Eingangsinformation gelegt wird.

15. Verfahren zum Steuern der Kennlinien des Steuerungsparameters nach Anspruch 14, **gekennzeichnet durch** Bestimmen des Steuerungsparametern in Übereinstimmung mit den Basis- Steuerungsparameter in Übereinstimmung mit den Basis- Steuerungsparametern, der Eingangsinformation und einer spezifizierten Bedingung.

16. Verfahren zum Steuern der Kennlinien des Steuerungsparameters nach Anspruch 14, **gekennzeichnet durch** Bestimmen der spezifizierten Bedingung in Übereinstimmung mit einer Beziehung der spezifizierten Eingangsinformation mit der Kennlinieninformation in Verbindung mit dem Basis- Steuerungsparameter.

17. Verfahren zum Steuern der Kennlinien des Steuerungsparameters entsprechend Anspruch 14 oder 16, **gekennzeichnet durch** Verändern der Kombinationsverhältnisse der Basis- Steuerungsparameter unter Verwendung der Fuzzy- Regeln zum Bestimmen der Steuerungsparameter, insbesondere dem Verändern der Fuzzy- Regeln in Übereinstimmung mit einer Absicht des Benutzers.

18. Verfahren zum Steuern der Kennlinien der Steuerungsparameter nach zumindest einem der Ansprüche 14 bis 17, **gekennzeichnet durch** Ausführen einer spezifizierten Bewertung auf der Grundlage der Eingangsinformation , um den Basis-Steuerungsparameter in Übereinstimmung mit einem evolutionären Berechnungsverfahren zu erzeugen, insbesondere eine Bewertungsfunktion zum Bewerten des Basis- Steuerungsparameters auf der Grundlage der Eingangsinformation.

19. Verfahren zum Steuern der Kennlinien des Steuerungsparameters entsprechend Anspruch 18, **gekennzeichnet durch** Bewerten des Basis- Steuerungsparameters auf der Grundlage einer Bedieninformation von einem Nutzer und Erzeugen des Basis- Steuerungsparameters in Übereinstimmung mit dem evolutionären Berechnungsverfahren auf der Grundlage eines Bewertungsergebnisses.

## Revendications

1. Dispositif de commande d'une caractéristique pour contrôler un objet contrôlé comprenant :
un module de commande de base pour déterminer une quantité de sortie de commande pour contrôler l'objet contrôlé en fonction d'au moins une information d'entrée spécifiée et d'un paramètre de commande, et
des moyens de modification de caractéristique automatique pour obtenir ledit paramètre de commande appliqué au module de commande de base en tant que combinaison pondérée d'une pluralité de paramètres de commande de base en fonction de ladite information d'entrée spécifiée.

2. Dispositif de commande d'une caractéristique selon la revendication 1, **caractérisé en ce que** lesdits moyens de modification de caractéristique automatique sont prévus pour déterminer ledit paramètre de commande appliqué au module de commande de base en fonction desdits paramètres de commande de base, de ladite information d'entrée spécifiée et d'une condition spécifiée.

3. Dispositif de commande d'une caractéristique selon la revendication 2, **caractérisé en ce que** lesdits moyens de modification de caractéristique automatique sont prévus pour déterminer ladite condition spécifiée en fonction d'une relation de ladite information d'entrée spécifiée avec des informations de caractéristique associées au paramètre de commande de base.

4. Dispositif de commande d'une caractéristique selon au moins l'une des revendications 1 à 3, **caractérisé en ce que** lesdits moyens de modification de caractéristique automatique sont prévus pour modifier le paramètre de commande fourni dans le module de commande de base.

5. Dispositif de commande d'une caractéristique selon au moins l'une des revendications 1 à 4, **caractérisé en ce que** lesdits moyens de modification de caractéristique automatique sont prévus pour modifier des rapports de combinaisons des paramètres de commande de base à l'aide de règles floues pour déterminer les paramètres de commande appliqués au module de commande de base.

6. Dispositif de commande d'une caractéristique selon la revendication 5, **caractérisé par** des moyens d'interface utilisateur pour modifier les règles floues dans les moyens de modification de caractéristique automatique.

7. Dispositif de commande d'une caractéristique selon la revendication 5 ou 6, **caractérisé en ce que** lesdits moyens d'interface utilisateur comprennent un dispositif d'affichage pour afficher les paramètres de commande de base modifiés à l'aide des règles floues des moyens de modification de caractéristique.

8. Dispositif de commande d'une caractéristique selon au moins l'une des revendications 1 à 7, **caractérisé par** des moyens de stockage de caractéristique pour stocker au moins un paramètre de commande de base.

9. Dispositif de commande d'une caractéristique selon au moins l'une des revendications 1 à 8, **caractérisé en ce qu'**au moins ledit module de commande de base est doté d'un premier dispositif et qu'au moins un dit moyen de modification de caractéristique automatique est prévu dans un second dispositif, dans lequel lesdits premier et second dispositifs peuvent être connectés pour le transfert de données.

10. Dispositif de commande d'une caractéristique selon au moins l'une des revendications 1 à 9, **caractérisé par** des moyens de génération de caractéristique pour exécuter une évaluation spécifiée sur la base de l'information d'entrée pour générer le paramètre de commande de base.

11. Dispositif de commande d'une caractéristique selon la revendication 10, **caractérisé en ce que** les moyens de génération de caractéristique sont prévus pour générer le paramètre de commande de base en fonction d'un procédé de calcul évolutif, plus spécifiquement une fonction d'évaluation pour évaluer le paramètre de commande de base sur la base de l'information d'entrée.

12. Dispositif de commande d'une caractéristique selon la revendication 10 ou 11, **caractérisé par** des moyens d'interface utilisateur pour manipuler le paramètre de commande de base généré avec les moyens de génération de caractéristique, plus spécifiquement pour évaluer le paramètre de commande de base sur la base des informations de manipulation de l'interface utilisateur et pour générer le paramètre de commande de base en fonction du procédé de calcul évolutif sur la base d'un résultat d'évaluation.

13. Dispositif de commande d'une caractéristique selon la revendication 12, **caractérisé en que** les moyens d'interface utilisateur comprennent des moyens d'affichage pour afficher au moins soit les informations sur la caractéristique représentant une caractéristique du paramètre de commande de base évalué et généré à l'aide des moyens de génération de caractéristique, soit le rapport du paramètre de commande de base modifié à l'aide de règles floues dans les moyens de modification de caractéristique automatique.

14. Procédé de contrôle d'un objet contrôlé comprenant :
la détermination d'une quantité de sortie de commande pour contrôler l'objet contrôlé en fonction d'au moins une information d'entrée spécifiée et d'un paramètre de commande, et
l'obtention dudit paramètre de commande appliqué au module de commande de base en tant que combinaison pondérée d'une pluralité de paramètres de commande de base en fonction de ladite information d'entrée spécifiée.

15. Procédé de contrôle de caractéristiques de paramètre de commande selon la revendication 14, **caractérisé par** la détermination dudit paramètre de commande en fonction desdits paramètres de commande de base, de ladite information d'entrée et d'une condition spécifiée.

16. Procédé de contrôle de caractéristiques de paramètre de commande selon la revendication 14, **caractérisé par** la détermination de ladite condition spécifiée en fonction d'une relation de ladite information d'entrée spécifiée avec une information de caractéristique associée au paramètre de commande de base.

17. Procédé de contrôle de caractéristiques de paramètre de commande selon la revendication 14 ou 16, **caractérisé par** la modification de rapports de combinaisons des paramètres de commande de base à l'aide de règles floues pour déterminer les paramètres de commande, particulièrement la modification des règles floues en fonction de l'intention de l'utilisateur.

18. Procédé de contrôle de caractéristiques de paramètre de commande selon au moins l'une des revendications 14 à 17, **caractérisé par** l'exécution d'une évaluation spécifiée sur la base de l'information d'entrée pour générer le paramètre de commande de base en fonction d'un procédé de calcul évolutif, particulièrement une fonction d'évaluation pour évaluer le paramètre de commande de base sur la base de l'information d'entrée.

19. Procédé de contrôle de caractéristiques de paramètre de commande selon la revendication 18, **caractérisé par** l'évaluation du paramètre de commande de base sur la base d'une information de manipulation d'un utilisateur et par la génération du paramètre de commande de base en fonction du procédé de calcul évolutif sur la base d'un résultat d'évaluation.
